# EUROPEAN PATENT APPLICATION

(11) **EP 3 753 859 A1**
(43) Date of publication of application: **23.12.2020**
(21) Application number: 18936144.7
(22) Date of filing: 04.10.2018
(51) Int. Cl.: B65D 30/16, B65D 33/10

(54) **CONTAINER**

(71) Applicant: Kao Corporation, Chuo-ku Tokyo 103-8210 (JP)
(72) Inventor: SHIBUTANI, Ryo, Tokyo 131-8501 (JP); INAGAWA, Yoshinori, Tokyo 131-8501 (JP); KODAMA, Daisuke, Tokyo 131-8501 (JP); OTSUKA, Takahiro, Tokyo 131-8501 (JP)
(74) Representative: Vossius & Partner Patentanwälte Rechtsanwälte mbB
(86) International application number: PCT/JP2018/037280
(87) International publication number: WO 2020/070866

(57) **Abstract**

A container (100) includes a containing portion (17) that is a closed space that stores contents (18), and also includes a container main body (20) including a body portion (11) that surrounds the containing portion (17) and also including a handle portion (12) that protrudes from the body portion (11). The container main body (20) includes a main-body forming sheet member (21) in which a plurality of film layers are stacked. The main-body forming sheet member (21) includes a non-attached region in which the plurality of film layers are partially not attached to each other, and also includes a filling portion (60) in which a filler is contained between layers of the plurality of film layers of the non-attached region. The filling portion (60) includes a first filling portion (61) formed in the body portion (11) and a second filling portion (62) formed in the handle portion (12). The first filling portion (61) and the second filling portion (62) communicate to each other.

## Description

### TECHNICAL FIELD

The present invention relates to a container and a contents-packed container.

### BACKGROUND ART

There is a soft packaging container made out of sheet members. In recent years, with the aim, for example, of improving a shape keeping property, a type of the soft packaging container is proposed to have a configuration in which a non-attached region is provided partially between layers of sheet members, and the non-attached region is filled with a filler such as air to form a filling portion (for example, Patent Document 1).

### Related Art Document

Patent Document 1: Japanese Patent Application (Translation of PCT Application) Laid-open No. 2015-520707

### SUMMARY OF THE INVENTION

The present invention relates to a container including:
a containing portion that is a closed space that stores contents; and
a container main body including:
   a body portion that surrounds the containing portion; and
   a handle portion that protrudes from the body portion, in which
the container main body includes a main-body forming sheet member in which a plurality of film layers are stacked,
the main-body forming sheet member includes:
   a non-attached region in which the plurality of film layers are partially not attached to each other; and
   a filling portion in which a filler is contained between layers of the plurality of film layers of the non-attached region,
the filling portion includes a first filling portion formed in the body portion and a second filling portion formed in the handle portion, and
the first filling portion and the second filling portion communicate to each other.

### BRIEF DESCRIPTION OF THE DRAWINGS

Fig. 1 is an elevation view illustrating a container according to a first exemplary embodiment.
Fig. 2 is a diagram illustrating an end surface cut along the line A-A in Fig. 1.
Fig. 3 is a diagram illustrating an end surface cut along the line C-C in Fig. 1.
Fig. 4 is a plan view illustrating the container according to the first exemplary embodiment.
Fig. 5 is a bottom view illustrating the container according to the first exemplary embodiment.
Fig. 6 is a side view illustrating the container according to the first exemplary embodiment as viewed from a handle portion side.
Fig. 7 is a partially enlarged view of Fig. 1.
Fig. 8 is a diagram illustrating an end surface cut along the line B-B in Fig. 1.
Fig. 9 is a plan view illustrating a main-body forming sheet member that constitutes a container main body of the container according to the first exemplary embodiment, in which the inner side surface of the container is illustrated on a side toward the viewer of this drawing.
Fig. 10 is a plan view illustrating a state in which an inner-bag forming sheet member that constitutes an inner bag (inner container) overlaps with and is attached to a main-body forming sheet member of the container according to the first exemplary embodiment, in which a surface (inner surface) that defines a containing portion in the inner-bag forming sheet member is illustrated on a side toward the viewer of this drawing.
Fig. 11 is an enlarged view schematically illustrating a portion A in Fig. 9.
Fig. 12 is an elevation view illustrating a container according to a second exemplary embodiment.
Fig. 13 is an elevation view illustrating a container according to a third exemplary embodiment.
Fig. 14 is an elevation view illustrating a container according to a fourth exemplary embodiment.
Fig. 15 is a partially enlarged elevation view illustrating a container according to a fifth exemplary embodiment.
Fig. 16 is a diagram illustrating an end surface cut along the line A-A in Fig. 15.
Fig. 17 is a partially enlarged elevation view illustrating a container according to a sixth exemplary embodiment.
Fig. 18 is a plan view illustrating a main-body forming sheet member that constitutes a container main body of the container according to the sixth exemplary embodiment, in which a surface disposed on the inner side of the container is illustrated on a side toward the viewer of this drawing.
Fig. 19A is an elevation view illustrating a container according to a seventh exemplary embodiment, and Fig. 19B is a side view illustrating the container according to the seventh exemplary embodiment.

### DETAILED DESCRIPTION OF THE INVENTION

In a case of the container of Patent Document 1, there is room for improvement in terms of holdability for a user (degree of easiness for the user to hold).

The present invention relates to a container having a structure with favorable holdability for a user, and also relates to a contents-packed container.

Below, preferred exemplary embodiments according to the present invention will be described with reference to the drawings. Note that, in all the drawings, the same reference characters are attached to similar constituent components, and detailed explanation thereof will not be repeated.

### [First Exemplary Embodiment]

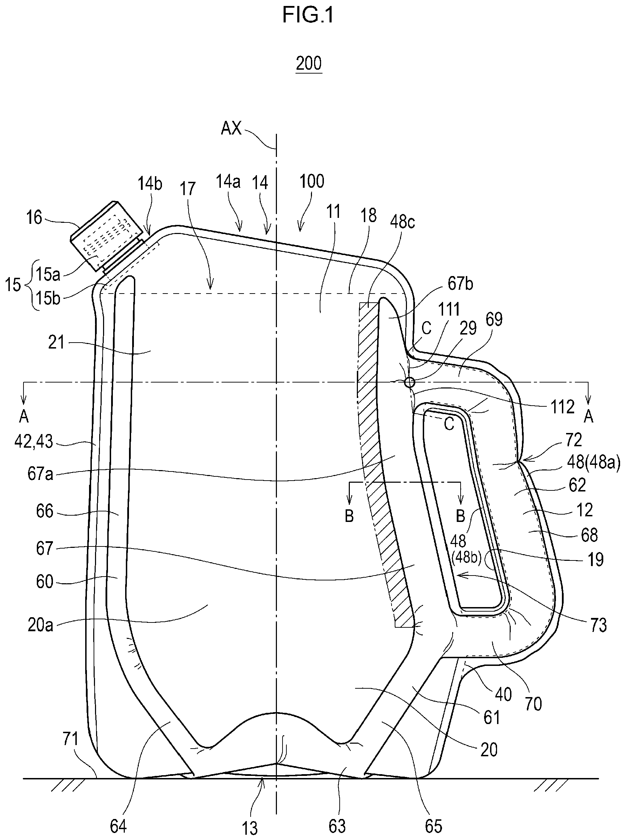

First, a first exemplary embodiment will be described with reference to Figs. 1 to 11.

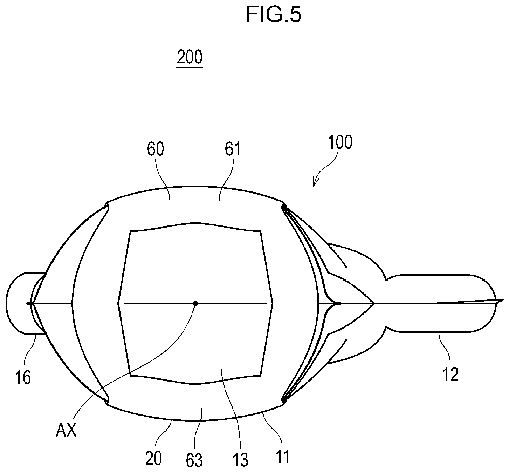

The mode of a container according to the present invention is not particularly limited. However, it may be possible to employ a mode in which the container can stand independently, or a mode in which the container does not stand independently and is expected to be used in a lying position. In a case of this exemplary embodiment, a container 100 includes a bottom gusset portion 13 (Fig. 1, Fig. 5), and is a freestanding container that can stand independently in a state in which a bottom gusset portion 13 is disposed on a horizontal mounting surface 71 as illustrated in Fig. 1.

In this exemplary embodiment, the positional relationship (up-down relationship or the like) of each constituent element of the container 100 is described in terms of a positional relationship in a state in which the container 100 is caused to stand independently as illustrated in Fig. 1, unless otherwise specified. However, the positional relationship in this description does not necessarily match the positional relationship at the time of manufacturing the container 100 or at the time of using the container 100.

In addition, in connection with the positional relationship of each constituent element of the container 100, the positional relationship illustrated in each of the drawings may be described.

The front surface side (side toward the viewer of Fig. 1) of the container 100 is referred to as a forward direction; the back surface side (side away from the viewer of Fig. 1) of the container 100 is referred to as a rearward direction; the left side (left side in Fig. 1) as viewed from the front surface of the container 100 is referred to as a leftward direction; and the right side (left side in Fig. 1) as viewed from the front surface of the container 100 is referred to as a rightward direction. Furthermore, the left-right direction of the container 100 may be referred to as a widthwise direction.

As illustrated in any of Figs. 1 to 6, the container 100 according to the present exemplary embodiment includes a containing portion 17 that is a closed space that stores contents 18, and a container main body 20 that includes a body portion 11 that surrounds the containing portion 17, and a handle portion 12 that protrudes from the body portion 11.

Here, the body portion 11 is a portion that surrounds the containing portion 17 in the container main body 20. The handle portion 12 is a portion disposed outside of the body portion 11 in the container main body 20. That is, the "handle portion 12 that protrudes from the body portion 11" means that the body portion 11 and the handle portion 12 are connected to each other, and the handle portion 12 is located outside of the body portion 11. The handle portion 12 is a portion suitable for a user to grip it, and allows the user to grip the handle portion 12 to lift the container 100 or discharge contents 18 (typically, let the contents 18 out) from the containing portion 17 of the container 100.

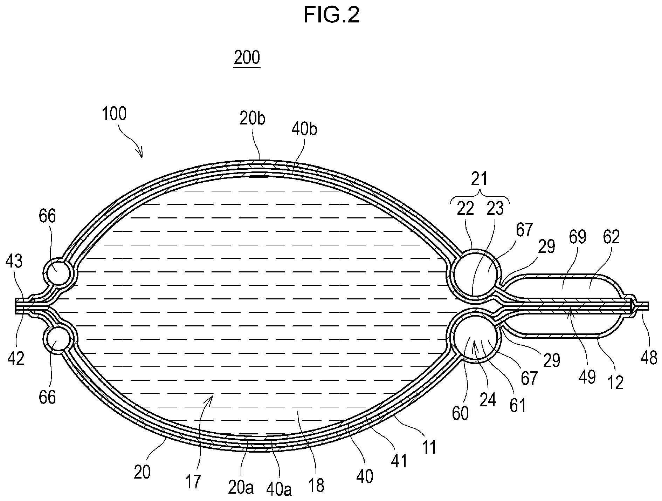

As illustrated in Fig. 2, the container main body 20 includes a main-body forming sheet member 21 in which plural film layers (in the case of this exemplary embodiment, two film layers of an outer film 22 and an inner film 23) are stacked. The main-body forming sheet member 21 includes a non-attached region 24 (Fig. 2) in which plural film layers are partially not attached to each other, and also includes a filling portion 60 in which a filler is contained between layers of the plural film layers of the non-attached region 24.

The filler contained in the filling portion 60 includes a fluid (gas or liquid), a solid (for example, a powder-granular material, resin pellet, or the like), or a semi-solid (for example, blowing agent or the like), and is preferably a gas such as air.

The filling portion 60 includes a first filling portion 61 formed in the body portion 11, and a second filling portion 62 formed in the handle portion 12. In addition, the first filling portion 61 and the second filling portion 62 communicate to each other.

According to the present exemplary embodiment, since the first filling portion 61 formed in the body portion 11 and the second filling portion 62 formed in the handle portion 12 of the container main body 20 communicate to each other, it is possible to improve a structural strength at a boundary portion between the body portion 11 and the handle portion 12. This allows suppression of wobbling of the body portion 11 relative to the handle portion 12 when a user grips the handle portion 12 to lift the container 100, which makes it possible to stably hold the entire container 100. In this manner, with the present exemplary embodiment, it is possible to provide a container 100 having a favorable structure in terms of holdability for a user. It is also possible to achieve favorable holdability, for example, even in a case of a container 100 having a large capacity (for example, equal to or more than 1 L).

Furthermore, a contents-packed container 200 according to the present exemplary embodiment includes the container 100 according to the present exemplary embodiment, and contents 18 stored in the containing portion 17.

In the present invention, types of contents 18 are not specifically limited. The contents 18 include, for example, detergent, bleach, softener, shampoo, conditioner, body soap, beverage, and food, and also include engine oil, chemical agent, and the like.

In addition, the contents 18 may be a liquid (including a form of paste), or may be a solid (for example, in a form of particle (including a form of grain) or in a form of powder).

In the case of this exemplary embodiment, the contents 18 are, for example, a liquid.

In a case where the contents 18 are a liquid, the viscosity of the contents 18 at, for example, 30°C preferably falls in a range of equal to or more than 1 mPa·s and equal to or less than 120000 mPa·s (measured by a B-type viscometer; for example, measured using viscometer TV-10 or viscometer TVB-10 made by Toki Sangyo Co., LTD. or the like), and more preferably falls in a range of equal to or more than 1 mPa·s and equal to or less than 60000 mPa·s.

In the case of this exemplary embodiment, the container 100 includes an inner bag 40 (inner container) made out of an inner-bag forming sheet member 41, as illustrated in Fig. 2. The inner bag 40 is surrounded by the container main body 20. The inner bag 40 includes the containing portion 17. The inner-bag forming sheet member 41 is folded and peripheral edge portions of this inner-bag forming sheet member 41 are attached to each other to form the inner bag 40 having a bag shape.

However, in the present invention, the inner container is not limited to that made out of a sheet member. For example, the inner container may be formed through blow molding.

The shape of the front surface of the container 100, that is, the shape of the front surface of the container main body 20 is not specifically limited. However, in the case of this exemplary embodiment, the shape of the front surface of the container main body 20 is substantially an elongated quadrilateral shape as illustrated, for example, in Fig. 1.

As illustrated in Fig. 2, the body portion 11 of the container main body 20 includes a first main surface portion 20a and a second main surface portion 20b, which are opposed to each other with the containing portion 17 being disposed therebetween. The first main surface portion 20a is disposed at the front surface side, and the second main surface portion 20b is disposed at the back surface side. The body portion 11 is formed into a bag shape having a bottom gusset portion 13 and a top gusset portion 14.

The handle portion 12 of the container main body 20 protrudes toward the lateral direction (rightward direction in Fig. 1) from the body portion 11.

More specifically, the handle portion 12 is formed into a semi-annular shape (C-shape (in Fig. 1, a shape obtained by reversing the left and right of a C-shape), and both end portions of the handle portion 12 are each connected to the body portion 11. In addition, in the container main body 20, a penetrating portion 19 that penetrates through this container main body 20 (in a forward-backward direction) is formed between the handle portion 12 and the body portion 11, as illustrated in Fig. 1. In the case of this exemplary embodiment, the penetrating portion 19 is a through-hole. However, the present invention is not limited to this example, and the penetrating portion 19 may be a slit.

The way of gripping the handle portion 12 is not specifically limited. However, as one example, a user can insert four fingers from the second finger to the fifth finger of a hand into the penetrating portion 19 to grip the handle portion 12 using these four fingers together with the first finger to lift the container 100.

The shape of the inner bag 40 is not specifically limited. However, in the case of this exemplary embodiment, the inner bag 40 is formed into a shape similar to that of the container main body 20. Thus, the inner bag 40 includes a portion disposed inside of the body portion 11 and constitutes the containing portion 17, and a portion disposed inside of the handle portion 12.

The portion of the inner bag 40 that is disposed inside of the body portion 11 is formed into a shape similar to that of the body portion 11, and includes a first main surface portion 40a located at the front surface side and a second main surface portion 40b located at the back surface side with the containing portion 17 being disposed therebetween.. The portion of the inner bag 40 that is disposed inside of the handle portion 12 is formed into a shape similar to that of the handle portion 12.

The interior region of the portion of the the inner bag 40 that is disposed inside of the handle portion 12 is referred to as a communicating region 49 (Fig. 2). The communicating region 49 communicates to the containing portion 17. In the case of this exemplary embodiment, the communicating region 49 communicates to the containing portion 17 at both end portions of the handle portion 12.

As described above, the communicating region 49 that communicates to the containing portion 17 is formed inside of the handle portion 12. This makes it possible to increase, by the amount of the communicating region 49, the capacity that can store the contents 18 within the container 100, as compared with a case where the container 100 does not include the communicating region 49.

In addition, the container 100 includes an inner container (inner bag 40) that is surrounded by the container main body 20. The inner container includes the containing portion 17 and the communicating region 49.

In other words, a portion (a portion that constitutes the communicating region 49) of the inner container is configured to enter the handle portion 12. This configuration enables a portion of the inner container to be retained within the handle portion 12 at the time of discharging the contents 18 from the container 100 (it is possible to prevent the inner container together with the contents 18 from falling down relative to the container main body 20). This achieves favorable discharging property for the contents 18 from the container 100.

As described above, the body portion 11 of the container main body 20 includes the bottom gusset portion 13 in the bottom portion thereof, and also includes the top gusset portion 14 in the upper end portion. In addition, a portion of the inner bag 40 that is disposed inside of the body portion 11 and constitutes the containing portion 17 is formed into a shape similar to that of the body portion 11. This makes it possible to secure a sufficient capacity of the containing portion 17.

The container 100 includes a discharge portion (for example, a spout 15) that allows the contents 18 to be discharged from the containing portion 17.

The position of the discharge portion in the container 100 is not specifically limited. However, in the case of this exemplary embodiment, the discharge portion is disposed in an upper end portion on a side opposite to the bottom portion. More specifically, the spout 15 serving as the discharge portion is provided so as to penetrate through the top gusset portion 14. The spout 15 includes, for example, a cylindrical outlet cylinder portion 15a through which the contents 18 are discharged, and a plate shape portion 15b having a plate shape and provided at one end of the outlet cylinder portion 15a in an axial direction so as to be perpendicular to this axial direction, the outlet cylinder portion 15a and the plate shape portion 15b being provided in an integral manner. On the inner-bag forming sheet member 41, the plate shape portion 15b is provided, for example, on an inner surface or an external surface and at a portion disposed along the top gusset portion 14 of the body portion 11.

The discharge portion is not limited to the spout. The discharge portion may be a film valve having, for example, a one-way function, or may be formed in the container 100 in a manner such that the container 100 is broken along a to-be-torn portion as in the sixth exemplary embodiment, which will be described later.

Here, the central axis AX illustrated in Fig. 1 is a vertical axis passing through the center of a plane of the bottom gusset portion 13 when the container 100 is placed on the mounting surface 71. The central axis AX is set to be the central axis of the container 100. In the case of this exemplary embodiment, the spout 15 is disposed on a side opposite to the handle portion 12 on the basis of the central axis AX of the container 100, as illustrated in Fig. 1. In Fig. 1, the handle portion 12 is disposed on the right side relative to the central axis AX, and the spout 15 is disposed on the left side relative to the central axis AX.

That is, the container 100 includes the discharge portion (spout 15) that allows the contents 18 to be discharged from the containing portion 17. The discharge portion is disposed on a side opposite to the handle portion 12 relative to the central axis AX of the container 100.

With the discharge portion (spout 15) and the handle portion 12 having such a positional relationship, it is possible for a user to more easily and stably perform an operation of gripping the handle portion 12 to hold the container 100, and discharging the contents 18 from the discharge portion.

In addition, in the case of this exemplary embodiment, the outlet cylinder portion 15a leans toward a side opposite to the handle portion 12. In other words, in Fig. 1, the axial direction of the outlet cylinder portion 15a leans toward the left side. Such a configuration makes it possible to more easily perform an operation of discharging the contents 18 from the discharge portion.

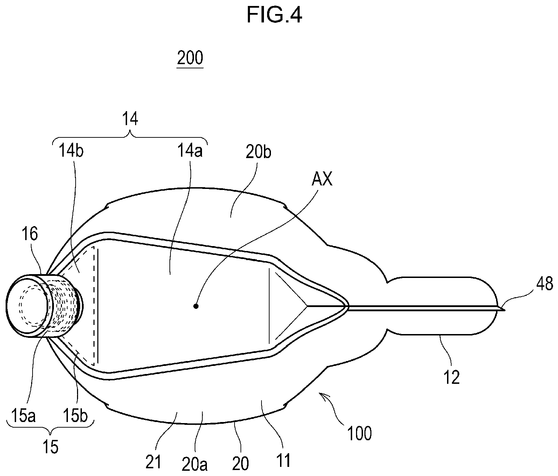

More specifically, the top gusset portion 14 includes a first portion 14a and a second portion 14b continuously connected to the forward side of the first portion 14a, as illustrated in Figs. 1 and 4.

For example, the first portion 14a is sloped downward toward the rightward direction, or is disposed horizontally.

The second portion 14b is disposed on the left side of the central axis AX, and is sloped downward toward the leftward direction.

In addition, the plate shape portion 15b of the spout 15 is disposed along the second portion 14b. With this configuration, the axial direction of the outlet cylinder portion 15a leans toward the left side.

The container 100 further includes a cap 16 that is detachably attached to the outlet cylinder portion 15a of the spout 15. The cap 16 is, for example, of a screwed cap.

In addition, in the case of this exemplary embodiment, the cap 16 closes an opening at the top end of the spout 15, which allows the containing portion 17 to be a closed space . However, the present invention is not limited to this example. As in other exemplary embodiments described later, the containing portion 17 may be a closed space in a state in which the container 100 is formed into a bag.

Next, an example of the filling portion 60 in the container 100 will be described in more detail.

In the case of this exemplary embodiment, the filling portion 60 includes: a circular filling portion 63 (Fig. 5, Fig. 1) formed into a circular shape along the peripheral edge of the bottom gusset portion 13; sloped filling portions 64 and 65 and body-portion vertically extending filling portions 66 and 67, each of which is formed in a front surface side of the body portion 11, that is, in the first main surface portion 20a; a vertically extending filling portion 68 and intersecting filling portions 69 and 70 formed in the front surface side of the handle portion 12; sloped filling portions 64 and 65 and body-portion vertically extending filling portions 66 and 67 formed in the back surface side of the body portion 11, that is, in the second main surface portion 20b; and a vertically extending filling portion 68 and intersecting filling portions 69 and 70 formed in the back surface side of the handle portion 12.

The first filling portion 61 is configured to include the sloped filling portions 64, 65, and the body-portion vertically extending filling portions 66, 67 formed in the first main surface portion 20a and the second main surface portion 20b.

The second filling portion 62 is configured to include the vertically extending filling portion 68, and the intersecting filling portions 69, 70 formed in the front surface side and the back surface side of the handle portion 12.

In the case of this exemplary embodiment, the entire filling portion 60 is formed in an integrated manner. However, in the present invention, the container 100 may include plural filling portions that are independent of each other.

A portion of the first filling portion 61 that is formed in the first main surface portion 20a will be described. The lower end of the sloped filling portion 64 communicates to the circular filling portion 63 at a left-half portion of a lower end portion of the first main surface portion 20a. The sloped filling portion 64 extends from the left-half portion of the lower end of the first main surface portion 20a toward an obliquely left upward direction. The lower end of the sloped filling portion 65 communicates to the circular filling portion 63 at a right-half portion of the lower end portion of the first main surface portion 20a. The sloped filling portion 65 extends from the right-half portion of the lower end of the first main surface portion 20a toward an obliquely right upward. The sloped filling portion 64 and the sloped filling portion 65 are arranged in a substantially left-right symmetry with each other. The upper end of the sloped filling portion 64 is continuously connected to the body-portion vertically extending filling portion 66. The body-portion vertically extending filling portion 66 extends vertically (from the upper end portion side of the body portion to the bottom portion side) along the left edge portion of the first main surface portion 20a. The upper end of the sloped filling portion 65 is continuously connected to the body-portion vertically extending filling portion 67. The body-portion vertically extending filling portion 67 extends vertically (from the upper end portion side of the body portion to the bottom portion side) along the right edge portion of the first main surface portion 20a.

In addition, one of or both of the body-portion vertically extending filling portion 66 and the body-portion vertically extending filling portion 67 may be sloped.

A portion of the first filling portion 61 that is formed in the second main surface portion 20b is disposed, for example, so as to be in a forward-backward symmetry with a portion of the first filling portion 61 that is formed on the first main surface portion 20a.

A portion of the second filling portion 62 that is formed in the front surface side of the handle portion 12 will be described. The intersecting filling portion 69 is disposed, for example, substantially horizontally in the upper portion of the handle portion 12. The left end of the intersecting filling portion 69 communicates to the body-portion vertically extending filling portion 67. That is, the intersecting filling portion 69 is a communicating filling portion that extends toward the first filling portion 61 and communicates to the first filling portion 61. A portion where the intersecting filling portion 69 and the body-portion vertically extending filling portion 67 communicate to each other is disposed at a position lower than the upper end of the body-portion vertically extending filling portion 67. Here, a portion of the body-portion vertically extending filling portion 67 that is disposed lower than the communicating portion between the body-portion vertically extending filling portion 67 and the intersecting filling portion 69 is an opposing portion 67a that is opposed to the vertically extending filling portion 68 with the penetrating portion 19 being disposed therebetween. A portion of the body-portion vertically extending filling portion 67 that is disposed higher than the communicating portion between the body-portion vertically extending filling portion 67 and the intersecting filling portion 69 is referred to as an upward extending portion 67b.

The intersecting filling portion 70 is disposed in a lower portion of the handle portion 12, and is disposed so as to be opposed to the intersecting filling portion 69 with the penetrating portion 19 being disposed therebetween. That is, the intersecting filling portion 70 is disposed, for example, substantially horizontally. In the present exemplary embodiment, the intersecting filling portion 70 is also a communicating filling portion that extends toward the first filling portion 61 and communicates to the first filling portion 61 (sloped filling portion 65).

The vertically extending filling portion 68 extends vertically. The upper end of the vertically extending filling portion 68 and the right end of the intersecting filling portion 69 communicate to each other. The lower end of the vertically extending filling portion 68 and the right end of the intersecting filling portion 70 communicate to each other.

A portion of the second filling portion 62 that is formed on the front surface side of the handle portion 12 is formed into a semi-annular shape (C-shape (in Fig. 1, a shape obtained by reversing the left and right of a C-shape)) along the handle portion 12.

In addition, the vertically extending filling portion 68 may be sloped.

A portion of the second filling portion 62 that is formed on the back surface side of the handle portion 12 is disposed, for example, so as to be in a forward-backward symmetry with a portion of the second filling portion 62 that is formed on the front surface side of the handle portion 12.

In the present exemplary embodiment, both end portions of a portion of the second filling portion 62 that is formed on the front surface side of the handle portion 12 each communicates to the first filling portion 61. In addition, both end portions of a portion of the second filling portion 62 that is formed on the back surface side of the handle portion 12 each communicate to the first filling portion 61. However, the present invention is not limited to this example. It may be possible to employ a configuration in which only either one of both end portions of the portion of the second filling portion 62 that is formed on the front surface side of the handle portion 12 communicates to the first filling portion 61, or a configuration in which only either one of both end portions of the portion of the second filling portion 62 that is formed on the back surface side of the handle portion 12 communicates to the first filling portion 61.

That is, the second filling portion 62 is formed into a semi-annular shape, and at least either one of both end portions of the second filling portion 62 communicates to the first filling portion 61.

More specifically, the body-portion vertically extending filling portion 67 of the first filling portion 61 and the second filling portion 62 communicate to each other at a boundary portion between the body portion 11 and the handle portion 12. With the body-portion vertically extending filling portion 67 and the second filling portion 62 directly communicating to each other as described above, it is possible to improve structural strength (load carrying property) particularly against load acting in the vertical direction, which makes it possible to further suppress wobbling of the body portion 11 relative to the handle portion 12 when a user grips the handle portion 12 to lift the container 100.

In particular, an attached portion 48c in which plural film layers (the outer film 22 and the inner film 23) are attached to each other is continuously formed along the entire region in which the body-portion vertically extending filling portion 67 extends, the attached portion 48c being provided in at least one of regions located at both sides of the body-portion vertically extending filling portion 67 in a direction perpendicular to a direction in which the body-portion vertically extending filling portion 67 extends. Since the body-portion vertically extending filling portion 67 and the attached portion 48c having increased rigidity extend in the vertical direction as described above, it is possible to improve the structural strength (load carrying property) against load acting in the vertical direction, which makes it possible to achieve favorable holdability at the time of lifting the container 100.

It is preferable that the body-portion vertically extending filling portion 67 and the attached portion 48c are formed continuously at least from a height position corresponding to an upper-side connecting portion to a height position corresponding to a lower-side connecting portion from among connecting portions (two connecting portions) of both end portions of the handle portion 12 to the body portion 11. That is, it is preferable that the upper end position of the body-portion vertically extending filling portion 67 and the upper end position of the attached portion 48c are disposed higher than the upper end position of the penetrating portion 19, and the lower end position of the body-portion vertically extending filling portion 67 and the lower end position of the attached portion 48c are disposed lower than the lower end position of the penetrating portion 19. The upper end position of the body-portion vertically extending filling portion 67 and the upper end position of the attached portion 48c may be disposed lower than the upper end position of the body portion 11, or may be equal to this upper end position. The lower end position of the body-portion vertically extending filling portion 67 and the lower end position of the attached portion 48c may be disposed higher than the lower end position of the body portion 11, or may be equal to the lower end position.

In addition, the attached portion in which plural film layers (the outer film 22 and the inner film 23) that constitute the main-body forming sheet member 21 are attached to each other is not limited to the attached portion 48c illustrated in Fig. 1, and is formed in an entire region adjacent to the periphery of the filling portion 60. In other words, the shape of the filling portion 60 is defined by the attached portion that surrounds a non-attached region 24, which will be described later.

In the case of this exemplary embodiment, the penetrating portion 19 is surrounded by a portion of the second filling portion 62 that is formed on the front surface side of the handle portion 12, and is also surrounded by a portion of the second filling portion 62 that is formed on the back surface side of the handle portion 12.

This makes it possible to insert fingers (for example, four fingers from the second finger to the fifth finger) into the penetrating portion 19 and also grip, using a hand, the handle portion 12 having a semi-annular shape and reinforced by the second filling portion 62, thereby achieving the handle portion 12 having more favorable gripping property.

The filling portion 60 includes a first parallel extending portion (opposing portion 67a) and a second parallel extending portion (vertically extending filling portion 68) that are opposed to each other with the penetrating portion 19 being disposed therebetween, the first parallel extending portion and the second parallel extending portion extending in parallel to each other. The first filling portion 61 includes the first parallel extending portion, and the second filling portion 62 includes the second parallel extending portion.

With the filling portion 60 including the first parallel extending portion and the second parallel extending portion, it is possible to achieve a structure having favorable gripping property of the container 100 and favorable shape keeping property of the body portion 11.

Here, the "first parallel extending portion and the second parallel extending portion that extend in parallel to each other" does not only mean a structure in which the first parallel extending portion and the second parallel extending portion extend in parallel to each other. The direction in which the first parallel extending portion extends and the direction in which the second parallel extending portion extends may slightly (for example, equal to or less than 30 degrees) differ from each other. It is preferable that a difference in angle between the direction in which the first parallel extending portion extends and the direction in which the second parallel extending portion extends is equal to or less than 10 degrees. In addition, in a case where the direction in which the first parallel extending portion extends and the direction in which the second parallel extending portion extends differ from each other, it is preferable that these directions are set such that the angle formed by these extending directions expands from the bottom portion toward the direction of top surface (directions spread in a form of inverted V-shape), from the viewpoint of improvement of the gripping property.

The direction in which the intersecting filling portion 69 extends and the direction in which the intersecting filling portion 70 extends intersect the direction in which the vertically extending filling portion 68 extends. The angle formed by the direction in which the vertically extending filling portion 68 extends relative to the direction in which the intersecting filling portion 69 extends and the direction in which the intersecting filling portion 70 extends is not specifically limited. However, for example, this angle is preferably equal to or more than 60 degrees and equal to or less than 120 degrees, and is more preferably equal to or more than 70 degrees and equal to or less than 110 degrees.

In addition, from the viewpoint of the gripping property and the shape keeping property of the handle portion 12, it is preferable that the filling portion having a substantially parallelogram shape is comprised of the intersecting filling portion 69, the vertically extending filling portion 68, the intersecting filling portion 70, and the opposing portion 67a.

The relationship between the lengths of the intersecting filling portion 69 and the intersecting filling portion 70 and the lengths of the vertically extending filling portion 68 and the opposing portion 67a is not specifically limited. However, it is preferable that the lengths of the vertically extending filling portion 68 and the opposing portion 67a are longer than the lengths of the intersecting filling portion 69 and the intersecting filling portion 70.

In the case of this exemplary embodiment, the second filling portion 62 includes an intersecting extending portion (intersecting filling portion 69) that extends in a direction that intersects the first parallel extending portion (opposing portion 67a). One end of the intersecting extending portion communicates to the first parallel extending portion, and the other end of the intersecting extending portion communicates to the second parallel extending portion (vertically extending filling portion 68).

In addition, the second filling portion 62 further includes a second intersecting extending portion (intersecting filling portion 70) that extends in parallel to the intersecting extending portion (intersecting filling portion 69).

Furthermore, one end of the second intersecting extending portion (intersecting filling portion 70) communicates to the first parallel extending portion (opposing portion 67a), and the other end of the second intersecting extending portion communicates to the second parallel extending portion (vertically extending filling portion 68).

Furthermore, the body-portion vertically extending filling portion 67 of the first filling portion 61 includes the opposing portion 67a that extends downward from the communicating portion between the body-portion vertically extending filling portion 67 and the intersecting filling portion 69, and also includes the upward extending portion 67b that extends upward from this communicating portion.

That is, the body-portion vertically extending filling portion 67 includes a first-direction extending portion (opposing portion 67a) that extends in a first direction from the communicating portion between the body-portion vertically extending filling portion 67 and the second filling portion 62, and also includes a second-direction extending portion (upward extending portion 67b) that extends from the communicating portion in a second direction differing from the first direction. Such a structure allows an improvement of the shape keeping property of the body portion 11 and the stability of the handle portion 12 relative to the body portion 11.

In the case of this exemplary embodiment, the second parallel extending portion (vertically extending filling portion 68) is formed so as to be larger in diameter than the first parallel extending portion (opposing portion 67a). This allows further improvement of the shape keeping property of the handle portion 12.

More specifically, in the case of this exemplary embodiment, the opposing portion 67a is formed larger in diameter than the body-portion vertically extending filling portion 66. This allows further improvement of the shape keeping property of the body portion 11 when a user grips the handle portion 12 to hold the container 100.

Yet more specifically, the upward extending portion 67b is formed larger in diameter than the body-portion vertically extending filling portion 66. In addition, the sloped filling portion 65 is formed larger in diameter than the sloped filling portion 64. These structures also allow further improvement of the shape keeping property of the body portion 11 when a user grips the handle portion 12 to hold the container 100. Furthermore, with the diameters of the body-portion vertically extending filling portion 66 and the sloped filling portion 64 being reduced, it is also possible to increase the capacity of the inner bag, which makes it possible to increase the amount of the contents filled.

Furthermore, the body-portion vertically extending filling portion 67 includes the upward extending portion 67b that extends more upward than the communicating portion between the body-portion vertically extending filling portion 67 and the intersecting filling portion 69, which makes it possible to improve the shape keeping property of a portion of the body portion 11 higher than this communicating portion. This enables the contents 18 to be stored to a higher position in the containing portion 17 in the body portion 11.

In the case of this exemplary embodiment, the handle portion 12 includes a handle-portion sealing portion in which plural film layers of the main-body forming sheet member 21 are attached to each other (directly or indirectly), the handle-portion sealing portion being provided on each of the outer peripheral side and the inner peripheral side of the handle portion 12. Of these portions, the handle-portion sealing portion on the outer peripheral side of the handle portion 12 is referred to as a handle-portion sealing portion 48a (Fig. 1), and a handle-portion sealing portion on the inner peripheral side (on a side facing the penetrating portion 19) of the handle portion 12 is referred to as a handle-portion sealing portion 48b (Fig. 1).

The handle-portion sealing portion may be configured by directly attaching the outer film 22 and the inner film 23 of the main-body forming sheet member 21, or may be configured by attaching the outer film 22 and the inner film 23 through an intervening layer (for example, inner-bag forming sheet member 41 or the like).

In the case of this exemplary embodiment, the second filling portion 62 extends along the handle portion 12 having a semi-annular shape. The "second filling portion 62 extending along the handle portion 12" means that the second filling portion 62 extends along at least a portion of the handle portion 12. In addition, in the case of this exemplary embodiment, a narrow portion 72 is formed at an intermediate portion between both ends of the second filling portion 62. In the case of this exemplary embodiment, the narrow portion 72 is formed in the second filling portion 62 on the outer peripheral side of the handle portion 12. Thus, at least a portion of the handle-portion sealing portion 48a on the outer peripheral side is inclined toward the forward side or the rearward side. This provides soft texture at the time of gripping the handle portion 12.

However, the present invention is not limited to this example. A bent portion may be formed at the intermediate portion between both ends of the second filling portion 62, whereby at least a portion of the handle-portion sealing portion 48a leans toward the forward direction or the rearward direction.

That is, in the case of this exemplary embodiment, the narrow portion 72 or the bent portion is formed at the intermediate portion between both ends of the second filling portion 62.

In addition, the diameter of the second filling portion 62 may partially reduce between both ends of this second filling portion 62. Even with such a configuration, it is possible to achieve a structure in which the narrow portion 72 or the bent portion is formed at the intermediate portion between both ends of the second filling portion 62, and at least a portion of the handle-portion sealing portion 48a leans toward the forward direction or the rearward direction.

In a case where the bent portion is formed in the second filling portion 62, it is possible to easily achieve a structure in which not only the handle-portion sealing portion 48a on the outer peripheral side but also at least a portion of the handle-portion sealing portion 48b on the inner peripheral side leans toward the forward direction or the rearward direction.

In the case of this exemplary embodiment, the width size of the handle-portion sealing portion 48a on the outer peripheral side of the handle portion 12 is larger than the width size of the handle-portion sealing portion 48b on the inner peripheral side of the handle portion 12. This allows the outer peripheral side of the handle portion 12 to be reinforced. This makes it possible to further improve the rigidity of the handle portion 12, and also provide soft texture at a portion (handle-portion sealing portion 48b) where a fingertip touches in the handle portion 12.

In the case of this exemplary embodiment, a local attached portion 29 in which plural film layers of the main-body forming sheet member 21 are locally attached to each other is formed near the communicating portion between the first filling portion 61 and the second filling portion 62.

The "near the communicating portion" typically means a position that is adjacent to the communicating portion. In the present exemplary embodiment, the local attached portion 29 is disposed at the communicating portion in an island manner, and the periphery thereof is surrounded by the communicating portion.

Here, the second filling portion 62 includes a communicating filling portion (in the case of this exemplary embodiment, intersecting filling portion 69, 70) that extends toward the first filling portion 61 and communicates to the first filling portion 61.

More specifically, the filling portion 60 includes the first portion (in the case of this exemplary embodiment, the opposing portion 67a), the second portion (in the case of this exemplary embodiment, the intersecting filling portion 69), and a third portion (in the case of this exemplary embodiment, the upward extending portion 67b), which are intersected with each other and communicate to each other at the boundary portion between the body portion 11 and the handle portion 12.

The first portion is formed in the body portion 11. The second portion is formed in the handle portion 12. The third portion is formed in the body portion 11 or the handle portion 12. In the case of this exemplary embodiment, the third portion (upward extending portion 67b) is formed in the body portion 11. That is, in the case of this exemplary embodiment, the first filling portion 61 includes the first portion and the third portion, and the second filling portion 62 includes the second portion.

In addition, the local attached portion 29 is formed so as to locally reduce the cross-sectional area of the filling portion 60 that is perpendicular to a direction in which the communicating filling portion extends. The local attached portion 29 is formed at the communicating portion between the communicating filling portion (intersecting filling portion 69) and the first filling portion 61, that is, at the communicating portion between the first filling portion 61 and the second filling portion 62 (see Figs. 1, 2, 3, 7, 9, and 10) .

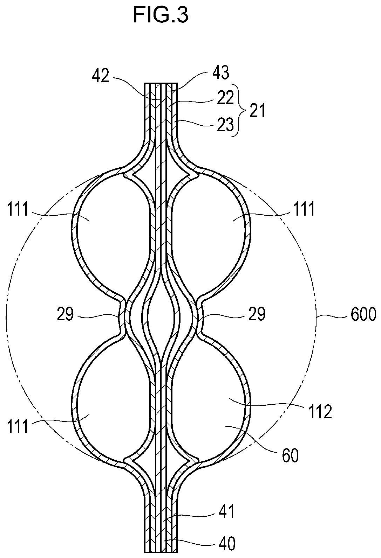

This structure makes it possible to appropriately secure a bending deformation property of the container main body 20 at the boundary portion between the body portion 11 and the handle portion 12. In other words, the cross-sectional area of the filling portion may increase at the communicating portion where plural filling portions that extend in different directions intersect each other. In a case where the local attached portion 29 is not provided, the cross-sectional area of the filling portion has a size as indicated by the imaginary line 600 in Fig. 3. As opposed to this, in the case of the present exemplary embodiment, the local attached portion 29 is formed near the communicating portion. This makes it possible to locally reduce the cross-sectional area of the filling portion at this communicating portion as indicated by the solid line in Fig. 3, which improves the bending deformation property of this communicating portion. Thus, the handle portion 12 does not deform in an unexpected direction with respect to the body portion 11, and it is possible to easily achieve a structure in which it bends in a desired direction. That is, it is possible to achieve a structure in which the handle portion 12 straightly extends from the body portion 11 toward the lateral direction (in the rightward direction), for example, as illustrated in Fig. 2 and Figs. 4 to 6.

More specifically, the local attached portion 29 is formed at the intersecting portion between the first portion, the second portion, and the third portion (intersecting portion between the opposing portion 67a, the intersecting filling portion 69, and the upward extending portion 67b). In other words, with the local attached portion 29 being formed at the intersecting portion between filling portions that extend in three directions, the bending deformation property of this intersecting portion improves.

The local attached portion 29 is formed in the non-attached region 24 in an island manner, as illustrated in Figs. 1, 9, and 10. The " local attached portion 29 is formed in the non-attached region 24 in an island manner" means that the local attached portion 29 is formed in the non-attached region 24 at a position that is spaced apart from a portion of the attached portion that surrounds the non-attached region 24, this attached portion being an attached portion between the outer film 22 and the inner film 23 of the main-body forming sheet member 21.

With the local attached portion 29 being formed in the non-attached region 24 in an island manner, communicating portions 111 and 112 are each formed on corresponding one of both sides with the local attached portion 29 being disposed therebetween, and near the communicating portion between the first filling portion 61 and the communicating filling portion of the second filling portion 62, that is, at the intersecting portion between the first portion (opposing portion 67a), the second portion (intersecting filling portion 69), and the third portion (upward extending portion 67b) of the filling portion 60, as illustrated in Figs. 1, 3, and 7. In the case of this exemplary embodiment, the communicating portions 111 and 112 are portions where the second portion (intersecting filling portion 69) communicates to the first portion and the third portion (the opposing portion 67a and the upward extending portion 67b). However, the present invention is not limited to this example. The communicating portions 111 and 112 may be portions where any portions from among the first portion to the third portion are combined, and communicate to each other.

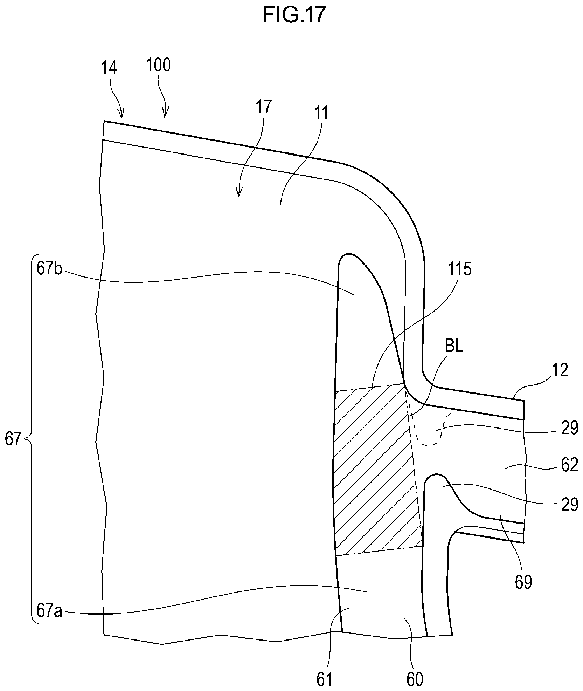

With the local attached portion 29 being formed in an island manner, it is possible to stably obtain the handle portion 12 having increased mechanical strength, as compared with a mode (described later) in which the local attached portion 29 is formed in a semi-island manner as illustrated in Fig. 17. In addition, the filling portion 60 exists around the local attached portion 29. Thus, in a case where the local attached portion 29 is formed on both of the forward side and the back surface side of the handle portion 12, it is possible to achieve the handle portion 12 having increased mechanical strength regardless of whether the position of the local attached portion 29 on the forward side of the container 100 and the position of the local attached portion 29 on the back surface side are equal to each other or these positions are different from each other. This makes it possible to prevent the handle portion 12 from being twisted with respect to the body portion 11.

With the communicating portions 111 and 112 being formed on both sides with the local attached portion 29 being disposed therebetween, this configuration allows a portion of the filling portion 60 where the local attached portion 29 is formed, to have a mechanical strength favorably balanced between both end portions with the local attached portion 29 being disposed therebetween.

The shape of the local attached portion 29 is not specifically limited. However, in the case of this exemplary embodiment, the local attached portion 29 is formed into a circular shape.

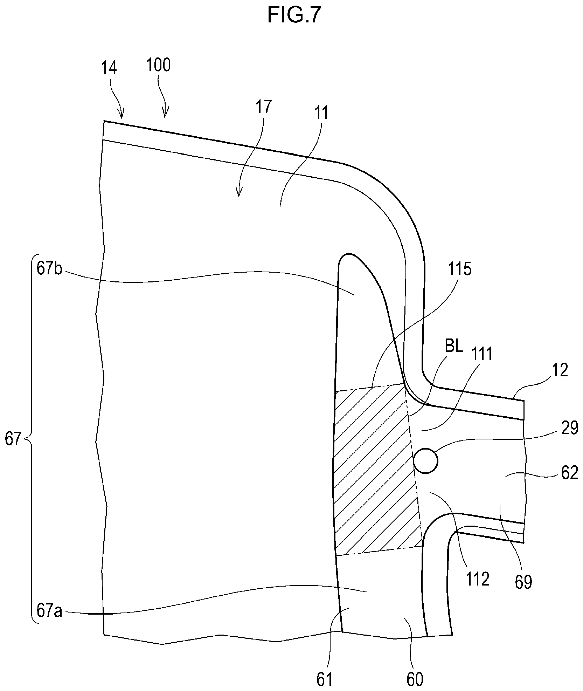

In addition, the "communicating portion between the first filling portion 61 and the communicating filling portion of the second filling portion 62" means the BL indicated by the imaginary line in Fig. 7 and near the BL.

In the case of this exemplary embodiment, the local attached portion 29 is disposed at a position along the boundary line BL (Fig. 7) between the second portion (intersecting filling portion 69) and a merging region 115 (Fig. 7) between the first portion (opposing portion 67a) and the third portion (upward extending portion 67b) . In other words, the local attached portion 29 is disposed near the boundary line BL. The distance between the position of the local attached portion 29 and the boundary line BL is preferably equal to or less than 30 mm, and is more preferably equal to or less than 15 mm.

This configuration makes it possible to appropriately secure a bending deformation property of a portion of the container main body 20 along the boundary line BL (or a portion in the vicinity thereof), which makes it possible to achieve a structure in which the handle portion 12 is bent toward a desired direction with respect to the body portion 11. In addition, it is possible to sufficiently secure the continuity between the first portion and the third portion, which makes it possible to sufficiently secure the mechanical property of a portion of the container main body 20 where the first portion and the third portion are formed.

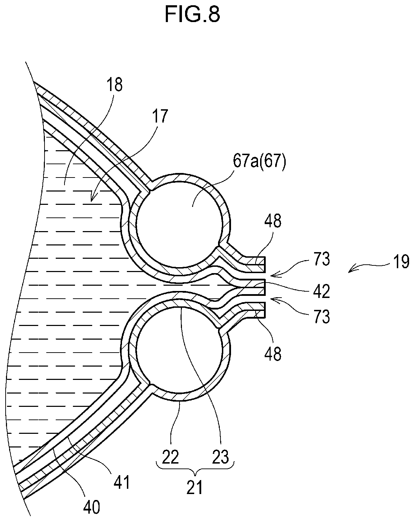

In the case of this exemplary embodiment, the container 100 includes an external-air introducing portion 73 (Figs. 1 and 8) that allows external air to be introduced between an external surface of the inner bag 40 (inner container) and an inner surface of the container main body 20.

As illustrated in Fig. 8, the external-air introducing portion 73 is comprised, for example, of a space between a portion of the body portion 11 that faces the penetrating portion 19, and a portion of the inner bag 40 that faces the penetrating portion 19. However, the external-air introducing portion 73 may be formed at any position, provided that it allows external air to be introduced.

With the container 100 including the external-air introducing portion 73, it is possible to easily make the inner bag 40 shrink independently of the container main body 20 at the time of discharging the contents 18 from the container 100. This improves discharging property for the contents 18 from the container 100.

As illustrated in Fig. 2, the container 100 is configured to include the main-body forming sheet member 21 that constitutes the container main body 20, and the inner-bag forming sheet member 41 that constitutes the inner bag 40.

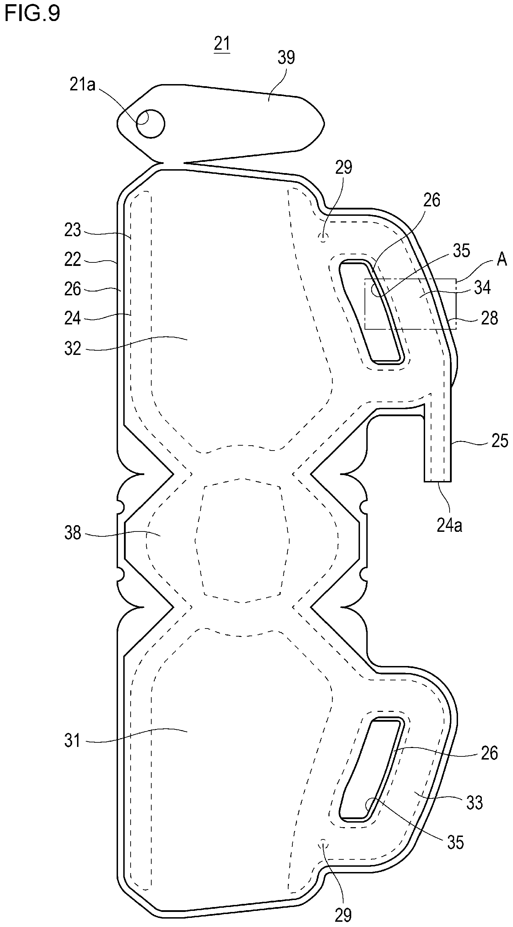

As illustrated in Fig. 9, the main-body forming sheet member 21 is configured by stacking and attaching, to each other, the outer film 22 that constitutes the external surface side of the container main body 20 and the inner film 23 that constitutes the inner surface side of the container main body 20. That is, as one example, in the case of this exemplary embodiment, the main-body forming sheet member 21 includes two layers of film layers including the outer film 22 and the inner film 23. However, the present invention is not limited to this example. The main-body forming sheet member 21 may have a film layer other than the outer film 22 and the inner film 23.

The non-attached region 24 in which the outer film 22 and the inner film 23 are partially not attached to each other is formed in the main-body forming sheet member 21. For example, a non-attaching treatment is partially applied to a surface of either one of or both of the outer film 22 and the inner film 23, this surface facing a surface of the other one. The non-attaching treatment can be easily formed by applying a non-attaching agent (so-called adhesion inhibiting agent) to bring an adhesion inhibiting state. For the adhesion inhibiting agent, any agent can be used, provided that it can prevent the outer film 22 and the inner film 23 from being attached together. For the adhesion inhibiting agent, it is possible to preferably use, for example, printing ink, medium ink, ink dedicated to adhesion inhibition, or the like used in offset printing, flexography, and letterpress printing (relief printing) . In addition, it is also possible to preferably use thermosetting ink or UV curable ink.

The range in which the non-attaching treatment is applied is to be the non-attached region 24. A filler is put into the non-attached region 24 to form the filling portion 60.

The filling portion 60 is not necessarily formed in the entire non-attached region 24, and may be formed in a portion of the non-attached region 24.

It is preferable that the entire surface of the inner film 23 except for the non-attached region 24 has an attached portion that is attached to one surface of the outer film 22, and the present exemplary embodiment employs this configuration.

As for a method of attaching the outer film 22 and the inner film 23 together, it is possible to use heat sealing, ultrasonic sealing, attaching with adhesive, or the like, as an example.

In addition, for example, the local attached portion 29 in which the outer film 22 and the inner film 23 are locally attached to each other is formed at a state in which the main-body forming sheet member 21 is formed. Furthermore, as for a method of forming the local attached portion 29, it is possible to use a method that is effective in attaching a very small region such as ultrasonic spot welding, adhesive sealing, and the like, in addition to the method identical to the attaching of the outer film 22 and the inner film 23 described above.

The outer film 22 and the inner film 23 also have a multilayer structure. In addition, the inner-bag forming sheet member 41 also has a multilayer structure.

As one example, the outer film 22 has a four-layer structure formed by stacking a first layer, a second layer, a third layer, and a fourth layer in this order.

Of these layers, the first layer includes, for example, polyethylene terephthalate (PET) or oriented nylon (ONy) . The main function of the first layer is to provide the container main body 20 with a feeling of gloss and printability, and also to provide the container main body 20 with rigidity.

The second layer is a layer of transparent deposition PET including polyethylene terephthalate obtained through vapor deposition of silica and/or alumina on a surface of this second layer on the first layer side. The main function of the second layer is to provide the container main body 20 with a gas barrier property.

The third layer includes, for example, oriented nylon. The main function of the third layer is to provide the container main body 20 with a pinhole resistance.

The fourth layer includes, for example, linear low-density polyethylene (LLDPE) . The main function of the fourth layer is to achieve a heat seal property with the inner film 23, a heat seal property between the outer film 22, and a heat seal property with the inner-bag forming sheet member 41.

As for the layer structure of the inner film 23, it is possible to employ a layer structure similar to the outer film 22. However, the material of each of the layers that constitute the outer film 22 and the inner film 23 is not limited to the examples described above. In addition, the inner film 23 may have a layer structure differing from that of the outer film 22.

The main-body forming sheet member 21 includes, for example: a first sheet portion 31 that is a portion that constitutes the first main surface portion 20a; a second sheet portion 32 that is a portion that constitutes the second main surface portion 20b; a bottom-gusset forming sheet portion 38 that is a portion that constitutes the bottom gusset portion 13; a first handle forming sheet portion 33 that is a portion that constitutes the front surface side of the handle portion 12; a second handle forming sheet portion 34 that is a portion that constitutes the back surface side of the handle portion 12; a top-gusset forming sheet portion 39 that is a portion that constitutes the top gusset portion 14; and a tube-shaped extending portion 25. For example, the extending portion 25 extends outward from the second handle forming sheet portion 34.

A penetrating portion 35 that corresponds to the penetrating portion 19 is formed between the first sheet portion 31 and the first handle forming sheet portion 33 and is also formed between the second sheet portion 32 and the second handle forming sheet portion 34.

An insert hole 21a into which the outlet cylinder portion 15a of the spout 15 is inserted is formed in the top-gusset forming sheet portion 39.

A portion of the main-body forming sheet member 21 that excludes the top-gusset forming sheet portion 39 and the extending portion 25 is referred to as a sheet main body portion 28.

In the case of this exemplary embodiment, the non-attached region 24 is formed into a shape that corresponds to the shape of the filling portion 60 of the container 100. For example, the non-attached region 24 communicates to the outside only through an open end 24a at the top end of the extending portion 25.

For example, the peripheral edge portion of a portion of the outer film 22 that constitutes the sheet main body portion 28 is an exposing portion 26 that is not covered with the inner film 23, except for a portion of the first sheet portion 31 that is adjacent to the penetrating portion 35, a portion of the second sheet portion 32 that is adjacent to the penetrating portion 35, and a portion of the second handle forming sheet portion 34 that corresponds to a base end of the extending portion 25.

In the case of this exemplary embodiment, the whole of the top-gusset forming sheet portion 39 is comprised, for example, of the outer film 22, and does not include the inner film 23. Thus, the whole of a portion of the outer film 22 that constitutes the top-gusset forming sheet portion 39 is the exposing portion 26 that is not covered with the inner film 23. However, the present invention is not limited to this. The top-gusset forming sheet portion 39 may also have a stacked structure of the outer film 22 and the inner film 23.

In the extending portion 25, the external line of the outer film 22 and the external line of the inner film 23 align with each other in plan view.

The exposing portion 26 serves as an attached portion (inner-outer seal portion 43) between the main-body forming sheet member 21 and the inner-bag forming sheet member 41 as well as an attached portion (main-body sealing portion 48) between main-body forming sheet member 21.

As one example, the inner-bag forming sheet member 41 that constitutes the inner bag 40 has a three-layer structure configured such that a first layer, a second layer, and a third layer are stacked in this order.

Of these layers, the first layer includes, for example, linear low-density polyethylene. The main function of the first layer is to achieve a heat seal property (heat seal property with the outer film 22) with the main-body forming sheet member 21.

The second layer is, for example, a layer of transparent deposition oriented nylon including oriented nylon obtained through vapor deposition of silica and/or alumina on a surface of this second layer on the first layer side. The main function of the second layer is to achieve a gas barrier property and a pinhole resistance.

The third layer includes, for example, linear low-density polyethylene. The main function of the third layer is to achieve a heat seal property between inner-bag forming sheet member 41.

In addition, the layer structure of the inner-bag forming sheet member 41 is not limited to the structure that has been described here.

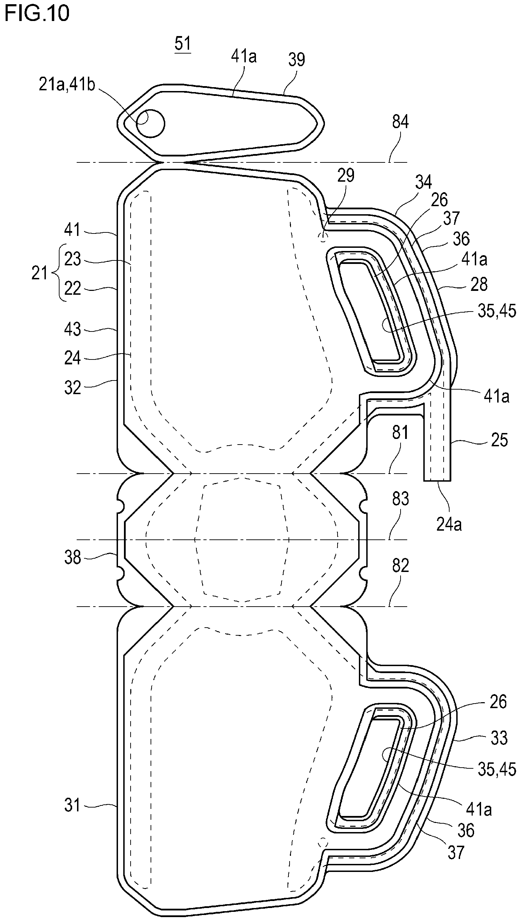

As illustrated in Fig. 10, the container forming sheet member 51 is configured with the main-body forming sheet member 21 and the inner-bag forming sheet member 41 in a manner such that the inner-bag forming sheet member 41 is stacked to the main-body forming sheet member 21, and the exposing portion 26 of the outer film 22 and the peripheral edge portion of the inner-bag forming sheet member 41 are attached to each other to form the inner-outer seal portion 43 (see Fig. 2).

In the case of this exemplary embodiment, the inner-bag forming sheet member 41 includes a portion having the same shape as the first sheet portion 31, a portion having the same shape as the second sheet portion 32, a portion having the same shape as the bottom-gusset forming sheet portion 38, and a portion having the same shape as the top-gusset forming sheet portion 39. These portions are layered with the first sheet portion 31, the second sheet portion 32, the bottom-gusset forming sheet portion 38, and the top-gusset forming sheet portion 39, respectively. The inner-bag forming sheet member 41 further includes a portion having a shape slightly smaller than the first handle forming sheet portion 33 and a portion having a shape slightly smaller than the second handle forming sheet portion 34. These portions are layered with the first handle forming sheet portion 33 and the second handle forming sheet portion 34, respectively.

A penetrating portion 45 having a size slightly larger than that of the penetrating portion 35 is formed in a portion of the inner-bag forming sheet member 41 that corresponds to each penetrating portion 35.

In addition, in Fig. 10, a seal boundary line 41a of the inner-bag forming sheet member 41 that constitutes the inner bag 40 is indicated by the solid line, for the purpose of convenience. The seal boundary line 41a is a boundary line between a region where the inner-bag forming sheet member 41 is attached (sealed) to each other and the other region of the inner-bag forming sheet member 41 when the container 100 is formed by using the container forming sheet member 51.

An insert hole 41b into which the outlet cylinder portion 15a of the spout 15 is inserted is formed in a portion of the inner-bag forming sheet member 41 that overlaps with the top-gusset forming sheet portion 39.

The plate shape portion 15b of the spout 15 is provided, for example, on an inner surface of a portion of the inner-bag forming sheet member 41 that overlaps with the top-gusset forming sheet portion 39. The outlet cylinder portion 15a is caused to pass through the insert hole 41b of the inner-bag forming sheet member 41 and the insert hole 21a of the top-gusset forming sheet portion 39, and protrudes toward the external surface side of these sheets.

Peripheral edge portions of the container forming sheet member 51 are attached to each other in a state where a folding line 81, a folding line 82, and a folding line 84, illustrated in Fig. 10, of the container forming sheet member 51 are folded as valley fold, and a folding line 83 is folded as mountain fold. With this operation, the container forming sheet member 51 is formed into a bag shape with a two-layer structure. Here, the "valley fold" means a way of folding in which it protrudes toward the side going away from the viewer of Fig. 10, and the "mountain fold" means a way of folding in which it protrudes toward the viewer of Fig. 10.

That is, edge portions of the inner-bag forming sheet member 41 are attached to each other to form the inner-bag sealing portion 42 (see Fig. 2). Thus, using the inner-bag forming sheet member 41, the inner bag 40 is formed. In addition, the outer film 22 is attached to each other at a portion of the main-body forming sheet member 21 that constitutes a bottom portion of the container main body 20 and also at a portion that constitutes the handle portion 12, thereby forming the main-body sealing portion 48 (see Fig. 2) . This forms the main-body forming sheet member 21 in a bag shape.

As for a method of attaching the inner-bag forming sheet member 41 to each other, and a method of attaching the outer film 22 to each other, it is possible to use heat seal, ultrasonic sealing, attaching with adhesive, or the like, as an example.

After the container forming sheet member 51 is formed into a bag shape with two layers, a filler is inputted from the open end 24a of the extending portion 25 into the non-attached region 24, and the non-attached region 24 is sealed, for example, at a portion continuously connected to the root end side of the extending portion 25. This makes it possible for the filler to be contained in the non-attached region 24 to form the filling portion 60. In addition, the pressure within the filling portion 60 is not specifically limited. However, it is preferable that this pressure is higher than atmospheric pressure, and for example, can be set to be equal to or more than 10 kPa and equal to or less than 500 kPa (gauge pressure) . After formation of the filling portion 60, the extending portion 25 is cut off, for example.

In this manner, it is possible to obtain the container 100. However, the extending portion 25 may exist even in a state of the container 100.

As described above, the body portion 11 includes the first main surface portion 20a and the second main surface portion 20b, which are opposed to each other with the containing portion 17 being disposed therebetween. The main-body forming sheet member 21 includes the first sheet portion 31 that constitutes the first main surface portion 20a, the second sheet portion 32 that constitutes the second main surface portion 20b, and the first handle forming sheet portion 33 that continues with the first sheet portion 31. The first handle forming sheet portion 33 constitutes the handle portion 12. In addition, the first filling portion 61 (at least a portion of the first filling portion 61) is formed in the first sheet portion 31. The second filling portion 62 (at least a portion of the second filling portion 62) is formed in the first handle forming sheet portion 33. More specifically, the main-body forming sheet member 21 further includes the second handle forming sheet portion 34 that continues with the second sheet portion 32. The first handle forming sheet portion 33 and the second handle forming sheet portion 34 are caused to overlap with each other to form the handle portion 12.

The first filling portion 61 (a portion of the first filling portion 61) is also formed in the second sheet portion 32. The second filling portion 62 (a portion of the second filling portion 62) is also formed in the second handle forming sheet portion 34.

After the container 100 is manufactured, the contents 18 are inputted through the outlet cylinder portion 15a of the spout 15 into the containing portion 17. After this, the cap 16 is mounted on the spout 15. This makes it possible to obtain the contents-packed container 200 in which the contents 18 are contained in the containing portion 17.

The container main body 20 includes a first communicating portion in which the first filling portion 61 formed in the first sheet portion 31 and the communicating filling portion of the second filling portion 62 formed in the first handle forming sheet portion 33 communicate to each other, and also includes a second communicating portion in which the first filling portion 61 formed in the second sheet portion 32 and the communicating filling portion of the second filling portion 62 formed in the second handle forming sheet portion 34 communicate to each other.

In addition, the first communicating portion and the second communicating portion overlap with each other in a direction in which the first main surface portion 20a and the second main surface portion 20b are opposed to each other.

In other words, the container 100 according to the present exemplary embodiment has a structure in which the first communicating portion and the second communicating portion, which are communicating portions comprised of filling portions that extend in different directions from each other, overlap with each other in the direction in which the first main surface portion 20a and the second main surface portion 20b are opposed to each other. Thus, in a portion where the first communicating portion and the second communicating portion overlap with each other, the filling portions having a large cross-sectional area are locally concentrated, and a force resulting from the filling portion on the front surface side and the filling portion on the back surface side pushing against each other in the front-rear direction tends to be strengthened locally.

However, as described above, the local attached portion 29 is formed near the communicating portion between filling portions that extend in different directions from each other. This enables the cross-sectional area of the filling portions to be reduced locally at the communicating portions, thereby appropriately suppressing the force resulting from the filling portion on the front surface side and the filling portion on the back surface side pushing against each other in the front-rear direction. This makes it possible to easily achieve a structure in which the handle portion 12 is bent toward a desired direction with respect to the body portion 11, as described above.

Furthermore, the present invention is not limited to this example. The second filling portion 62 may not be formed in the second handle forming sheet portion 34. In addition, the handle portion 12 may be comprised only of the first handle forming sheet portion 33 (configuration in which the second handle forming sheet portion 34 is not included).

In the case of this exemplary embodiment, the local attached portion 29 is formed in each of the first sheet portion 31 and the second sheet portion 32 (see Figs. 3, 9, and 10). More specifically, the local attached portion 29 is formed near the first communicating portion and is also formed near the second communicating portion. This makes it possible to achieve the filling portions having rigidity favorably balanced between the first communicating portion and the second communicating portion (that is, between the front surface side and the back surface side of the container main body 20). Thus, it is possible to more easily achieve a structure in which the handle portion 12 straightly extends toward the lateral direction (the rightward direction) from the body portion 11.

In the case of this exemplary embodiment, the local attached portion 29 of the first sheet portion 31 and the local attached portion 29 of the second sheet portion 32 each have a shape equal to each other. However, the present invention is not limited to this example. The local attached portion 29 of the first sheet portion 31 and the local attached portion 29 of the second sheet portion 32 may have different shapes.

In the case of this exemplary embodiment, the local attached portion 29 of the first sheet portion 31 and the local attached portion 29 of the second sheet portion 32 overlap with each other in the front-rear direction. In other words, when the container 100 is viewed from a direction in which the first main surface portion 20a and the secondmain surface portion 20b are opposed to each other, the local attached portion 29 of the first sheet portion 31 and the local attached portion 29 of the second sheet portion 32 at least partially overlap with each other.

Thus, in the first communicating portion and the second communicating portion, it is possible to achieve favorable balance in terms of rigidity of the filling portions, and it is possible to more easily achieve a structure in which the handle portion 12 straightly extends toward the lateral direction (the rightward direction) from the body portion 11.

More specifically, substantially the entire local attached portion 29 of the first sheet portion 31 and substantially the entire local attached portion 29 of the second sheet portion 32 overlap with each other in the front-rear direction.

Here, in the case of this exemplary embodiment, both end portions of the second filling portion 62 each communicate to the first filling portion 61, as described above. In addition, of the communicating portions between the second filling portion 62 and the first filling portion 61, the local attached portion 29 is formed on the upper side, that is, near the communicating portion disposed near the spout 15. In other words, the local attached portion 29 is formed at the intersecting portion of the opposing portion 67a, the intersecting filling portion 69, and the upward extending portion 67b, rather than at the intersecting portion of the opposing portion 67a, the intersecting filling portion 70, and the sloped filling portion 65.

As described above, the container 100 according to the present exemplary embodiment includes a discharge portion (spout 15) that allows the contents 18 to be discharged from the containing portion 17, as illustrated in Fig. 1. The filling portion 60 includes the first filling portion 61 disposed in the body portion 11 and including the first portion (opposing portion 67a), and also includes the second filling portion 62 disposed in the handle portion 12 and including the second portion (intersecting filling portion 69). The second filling portion 62 is formed into a semi-annular shape. One end portion and the other end portion of the second filling portion 62 each have the communicating filling portion (intersecting filling portion 69, 70) that communicates to the first filling portion 61. The local attached portion 29 is formed so as to locally reduce the cross-sectional area of the filling portion 60 that is perpendicular to the direction in which the communicating filling portion (intersecting filling portion 69) extends, the formation of the local attached portion 29 being at the communicating portion that corresponds to the end portion disposed closer to the discharge portion from among the one end portion and the other end portion of the second filling portion 62.

This makes it possible to achieve a structure in which a portion of the handle portion 12 that is close to the discharge portion (spout 15) is bent toward a desired direction with respect to the body portion 11 (structure that straightly extends toward the lateral direction (rightward direction) from the body portion 11). Thus, it is possible to suppress wobbling of the body portion 11 relative to the handle portion 12 when a user grips the handle portion 12 to hold the container 100, and discharge the contents 18 from the discharge portion. This makes it possible to more easily discharge the contents 18.

Here, as can be understood from the description above, the body portion 11 includes the bottom portion (bottom gusset portion 13). The discharge portion (spout 15) is disposed on a side opposite to the bottom portion, that is, disposed in an upper portion of the body porion 11. The handle portion 12 protrudes toward the lateral direction from the body portion 11. The one end portion of the second filling portion 62 is disposed higher than the other end portion of the second filling portion 62. The local attached portion 29 is formed at the communicating portion corresponding to the one end portion of the second filling portion 62 so as to locally reduce the cross-sectional area of the filling portion 60 perpendicular to the direction in which the communicating filling portion (intersecting filling portion 69) extends.

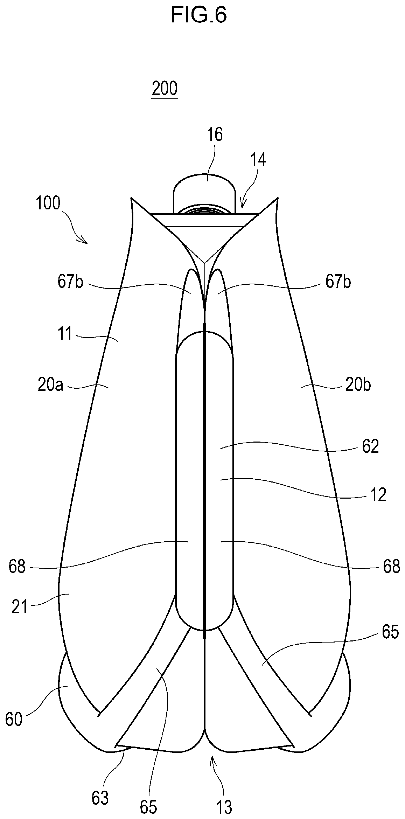

With the body portion 11 including the bottom gusset portion 13, the lower portion of the sloped filling portion 65 of the body portion 11 is configured such that the distance between the sloped filling portion 65 formed in the first main surface portion 20a and the sloped filling portion 65 formed in the second main surface portion 20b gradually increases toward the downward, as illustrated in Fig. 6.

Thus, there is a tendency that the pushing force against each other in the front-rear direction between the communicating portion of the opposing portion 67a, the intersecting filling portion 70, and the sloped filling portion 65 in the first main surface portion 20a and the communicating portion of the opposing portion 67a, the intersecting filling portion 70, and the sloped filling portion 65 in the second main surface portion 20b is lower than the pushing force against each other in the front-rear direction between the communicating portion of the opposing portion 67a, the intersecting filling portion 69, and the upward extending portion 67b in the first main surface portion 20a and the communicating portion of the opposing portion 67a, the intersecting filling portion 69, and the upward extending portion 67b in the second main surface portion 20b.

In addition, with the local attached portion 29 being formed near the communicating portion on the upper side (the intersecting portion of the opposing portion 67a, the intersecting filling portion 69, and the upward extending portion 67b), it is possible to more easily manipulate the spout 15 in a targeted direction at the time of gripping the handle portion 12 to hold the container 100 and discharge the contents 18 from the spout 15.

Thus, from the viewpoint of sufficiently obtaining the structural strength at the boundary portion between the body portion 11 and the handle portion 12, in a case where the local attached portion 29 is formed in only either one of the communicating portion on the upper side (intersecting portion of the opposing portion 67a, the intersecting filling portion 69, and the upward extending portion 67b) and the communicating portion on the lower side (intersecting portion of the opposing portion 67a, the intersecting filling portion 70, and the sloped filling portion 65), it can be said that it is rational to form the local attached portion 29 only near the communicating portion on the upper side. In particular, in a case where the container 100 has a large capacity size, the local attached portion 29 is formed only at the communicating portion on the upper side, and the local attached portion 29 is not formed at the communicating portion on the lower side. This provides the container 100 with excellent holdability.

However, the present invention is not limited to this example. For example, in a case where the container does not have a large capacity size, the local attached portion 29 may be formed in both of the intersecting portion on the upper side and the intersecting portion on the lower side.

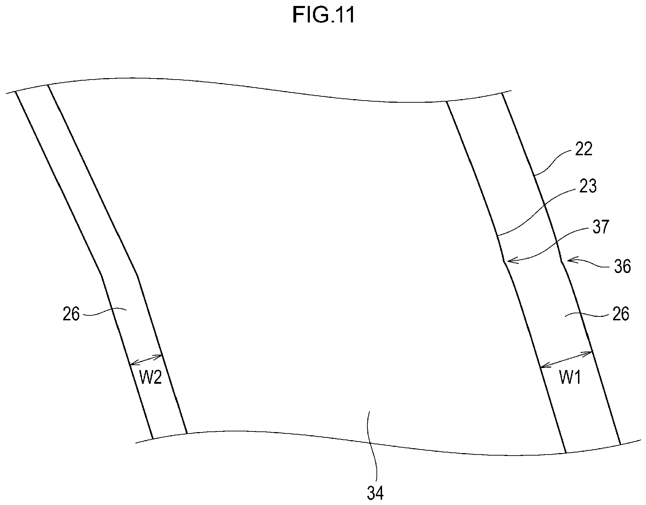

Fig. 11 is an enlarged view schematically illustrating a portion A illustrated in Fig. 9.

As illustrated in Fig. 11, narrow portions 36 and 37 (portions of inflection points that are recessed inwardly) are formed locally on the edge (external line) of a portion of the handle portion 12 that forms the outer peripheral side from among portions of the outer film 22 and the inner film 23 that constitute the second handle forming sheet portion 34.

With such narrow portions 36 and 37 being formed in the outer film 22 and the inner film 23, it is possible to easily form the narrow portion 72, as illustrated in Fig. 1, due to an effect of distortion occurring when the second filling portion 62 of the handle portion 12 expands in a three-dimensional manner.

Furthermore, the width size W1 of the exposing portion 26 that is to be the handle-portion sealing portion 48a of the handle portion 12 on the outer peripheral side is larger than the width size W2 of the exposing portion 26 that is to be the handle-portion sealing portion 48b of the handle portion 12 on the inner peripheral side, as illustrated in Fig. 11.

This makes it possible to achieve a structure in which the width size of the handle-portion sealing portion 48a of the handle portion 12 on the outer peripheral side is larger than the width size of the handle-portion sealing portion 48b of the handle portion 12 on the inner peripheral side, as described above.

### [Second Exemplary Embodiment]

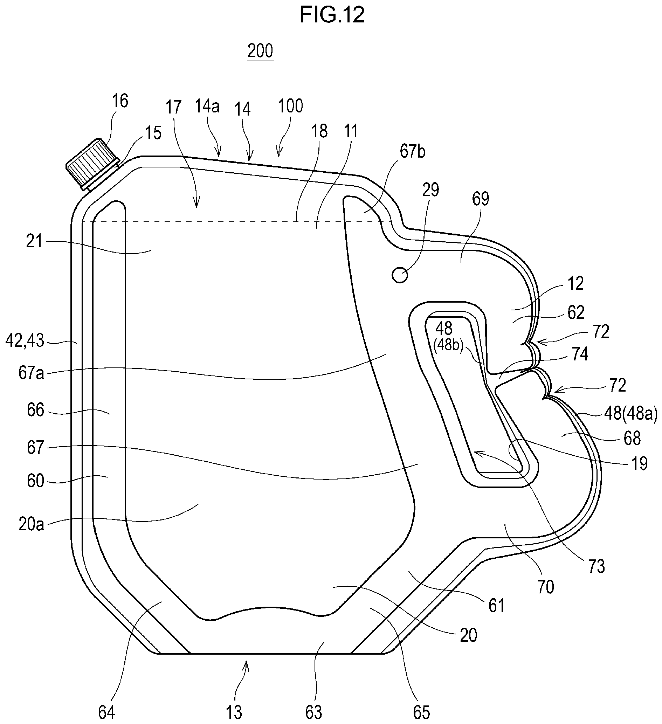

Next, a second exemplary embodiment will be described with reference to Fig. 12.

A container 100 according to the present exemplary embodiment differs from the container 100 according to the first exemplary embodiment described above in terms of the point described below. In other points, the container 100 according to the present exemplary embodiment is configured in a manner similar to the container 100 according to the first exemplary embodiment described above.

The first exemplary embodiment described above gives an example in which the second filling portion 62 is formed continuously over both end portions of this second filling portion 62. However, in the case of this exemplary embodiment, a second filling portion 62 is formed in a partially discontinuous manner between both end of this second filling portion 62 as illustrated in Fig. 12.

That is, a discontinuity portion 74 configured by attaching the outer film 22 and the inner film 23 of the main-body forming sheet member 21 to each other is formed in the handle portion 12. The second filling portion 62 is partitioned by this discontinuity portion 74.

In the case of this exemplary embodiment, the discontinuity portion 74 is formed in the vertically extending filling portion 68. More specifically, the discontinuity portion 74 is disposed at a central portion of the vertically extending filling portion 68 in the vertical direction. Thus, the vertically extending filling portion 68 is divided into two portions in the vertical direction.

The discontinuity portion 74 traverses the vertically extending filling portion 68 in a direction perpendicular to the longitudinal direction of this vertically extending filling portion 68. As illustrated in Fig. 12 as an example, it is preferable that the dimension of the discontinuity portion 74 in the longitudinal direction of the vertically extending filling portion 68 is smaller than the dimension of the discontinuity portion 74 in a direction perpendicular to the longitudinal direction of the vertically extending filling portion 68.

A portion of the handle portion 12 where the discontinuity portion 74 is formed is a structurally weak portion as compared with a portion of the handle portion 12 where the second filling portion 62 is formed. With this configuration, the portion of the handle portion 12 where the discontinuity portion 74 is formed deforms to absorb the distortion occurring when the second filling portion 62 of the handle portion 12 expands in a three-dimensional manner. Thus, a narrow portion 72 where the handle portion 12 is narrowed is formed above and below the discontinuity portion 74.

More specifically, at the narrow portion 72, the handle portion 12 is slightly bent toward the inner direction of the penetrating portion 19.

That is, in the case of this exemplary embodiment, a narrow portion or a bent portion is formed at an intermediate portion between both ends of the second filling portion 62.

With this configuration, in the case of this exemplary embodiment, the handle-portion sealing portion 48a leans forward or backward, and the handle-portion sealing portion 48b also leans backward. This provides the handle portion 12 with a softer texture.

It is preferable that the discontinuity portion 74 on the front surface side of the handle portion 12 and the discontinuity portion 74 on the back surface side (the discontinuity portion 74 of the first handle forming sheet portion 33 and the discontinuity portion 74 of the second handle forming sheet portion 34) are disposed at positions that overlap with each other in the front-rear direction.

### [Third Exemplary Embodiment]

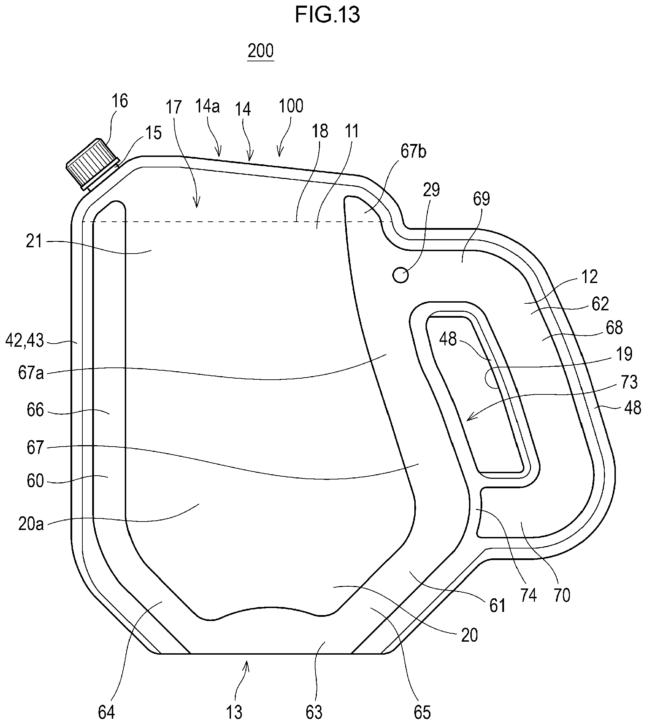

Next, a third exemplary embodiment will be described with reference to Fig. 13.

The container 100 according to the present exemplary embodiment differs from the container 100 according to the second exemplary embodiment described above in terms of the point described below. In other points, the container 100 according to the present exemplary embodiment is configured in a manner similar to the container 100 according to the second exemplary embodiment described above.

In the case of this exemplary embodiment, the discontinuity portion 74 is disposed between a left end portion of the intersecting filling portion 70 and a boundary portion between the body-portion vertically extending filling portion 67 and the sloped filling portion 65. Thus, the second filling portion 62 communicates to the first filling portion 61 only at one end portion, and does not communicate to the first filling portion 61 at the other end portion.

In the case of this exemplary embodiment, a portion of the handle portion 12 where the discontinuity portion 74 is formed deforms to absorb the distortion occurring when the second filling portion 62 of the handle portion 12 expands in a three-dimensional manner.

In the case of this exemplary embodiment, the first filling portion 61 and the second filling portion 62 are communicate with each other at a left end portion of the intersecting filling portion 69 and the boundary portion between the opposing portion 67a and the upward extending portion 67b. This achieves favorable holdability of the container 100 for a user.

The discontinuity portion 74 is not limited to that disposed at the position as described in the present exemplary embodiment. For example, the discontinuity portion 74 may be disposed between the left end portion of the intersecting filling portion 69 and the boundary portion between the opposing portion 67a and the upward extending portion 67b.

In addition, the left-right dimension of the discontinuity portion 74 may be wider than that in the present exemplary embodiment. For example, it may be possible to employ a configuration in which the discontinuity portion 74 is formed over the lower end portion of the vertically extending filling portion 68 and the boundary portion between the body-portion vertically extending filling portion 67 and the sloped filling portion 65, and the filling portion 60 does not include the intersecting filling portion 70.

### [Fourth Exemplary Embodiment]

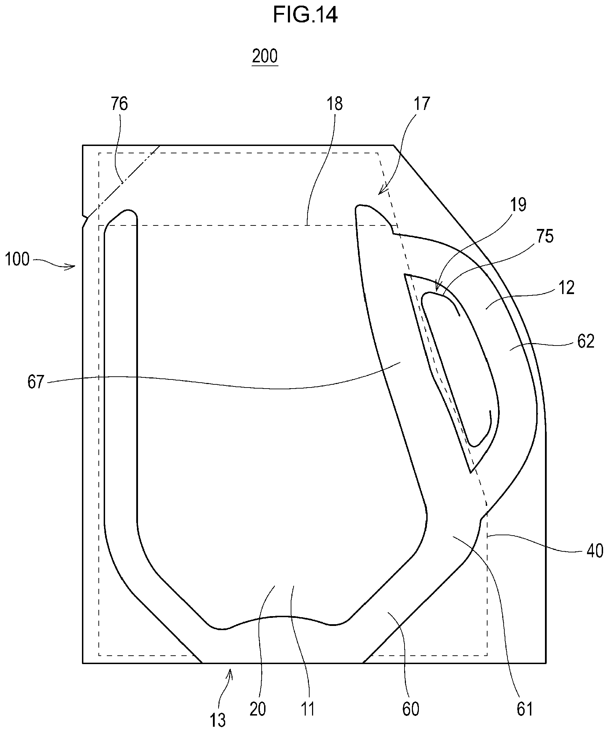

Next, a fourth exemplary embodiment will be described with reference to Fig. 14.

A container 100 according to the present exemplary embodiment differs from the container 100 according to the first exemplary embodiment described above in terms of the point described below. In other points, the container 100 according to the present exemplary embodiment is configured in a manner similar to the container 100 according to the first exemplary embodiment described above.

In the case of this exemplary embodiment, a slit 75 having a shape such as a C-shape is formed in a region of the handle portion 12 that is surrounded by the second filling portion 62. A portion of the handle portion 12 that is surrounded by the slit 75 is folded over to form the penetrating portion 19. In other words, the penetrating portion 19 is normally closed by a portion of the handle portion 12 that is surrounded by the slit 75. By folding this portion over, the penetrating portion 19 is made opened.

In addition, in the case of this exemplary embodiment, the container 100 does not include the spout 15. Instead, the container 100 includes a to-be-torn portion 76. The to-be-torn portion 76 is disposed at a position that acrossing the end portion of the containing portion 17.

It is preferable to form a tear guiding line in the to-be-torn portion 76. The tear guiding line is comprised, for example, of a half-cut groove formed in at least one of the container main body 20 and the inner bag 40, a perforation formed in the container main body 20, or an easily openable film. However, the tear guiding line may not be formed in the to-be-torn portion 76.

A user tears the container 100 along the to-be-torn portion 76, so that a discharge port (discharge portion) is formed in the container 100.

In the case of this exemplary embodiment, the filling portion 60 also includes the first filling portion 61 formed in the body portion 11, and the second filling portion 62 formed in the handle portion 12. The first filling portion 61 and the second filling portion 62 communicate to each other. In the present exemplary embodiment, unlike the container 100 according to the first embodiment described above, the second filling portion 62 cannot be clearly distinguished into the vertically extending filling portion 68 and intersecting filling portion 69, 70 which have different extending directions. The second filling portion 62 extends in the vertical direction while curving convexly toward the outward direction from the body portion 11. Even with such a shape, the first filling portion 61 and the second filling portion 62 communicate to each other, which results in favorable holdability of the container 100 for a user.

### [Fifth Exemplary Embodiment]

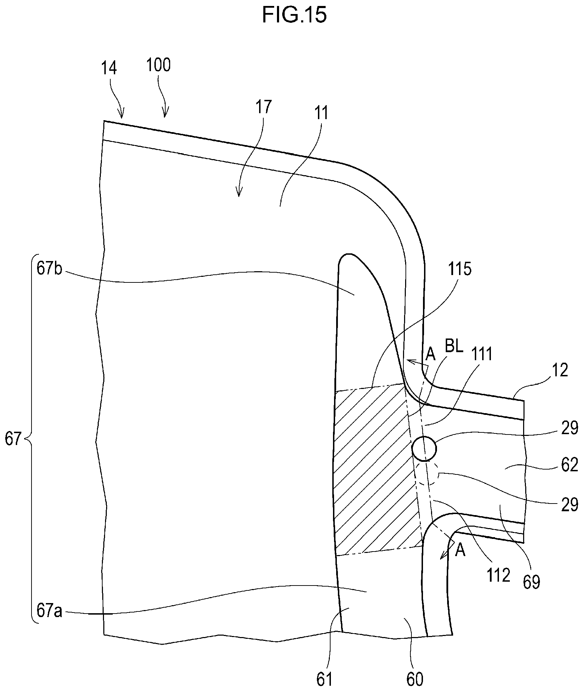

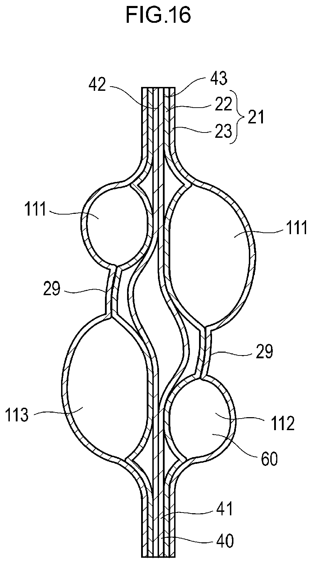

Next, a fifth exemplary embodiment will be described with reference to Figs. 15 and 16.

A container 100 according to the present exemplary embodiment differs from the container 100 according to the first exemplary embodiment described above in terms of the point described below. In other points, the container 100 according to the present exemplary embodiment is configured in a manner similar to the container 100 according to the second exemplary embodiment described above.

In the case of this exemplary embodiment, as illustrated in Figs. 15 and 16, the local attached portion 29 of the first sheet portion 31 and the local attached portion 29 of the second sheet portion 32 are disposed at locations positionally shifted to each other, when the container 100 is viewed from a direction (front-rear direction) in which the first main surface portion 20a and the second main surface portion 20b are opposed to each other. This makes it possible to make the size balance between the communicating portion 111 and the communicating portion 112 on the front surface (first sheet portion 31) side and the size balance between the communicating portion 111 and the communicating portion 112 on the back surface (second sheet portion 32) side can be made different from each other, as illustrated in Fig. 16. Thus, it can be expected that the force with which the communicating portion 111 and the communicating portion 112 on the front surface side and the communicating portion 111 and the communicating portion 112 on the back surface side press each other can be reduced, as compared with the first exemplary embodiment, although it depends on conditions such as a shape of the filling portion 60. This makes it possible to expect an improvement of stability of a direction of the handle portion 12 relative to the body portion 11.

In addition, in the case of this exemplary embodiment, both of the local attached portions 29 are disposed at positions along the boundary line BL (Fig. 15). Thus, with the present exemplary embodiment, it is also possible to achieve a structure in which the handle portion 12 is bent toward a desired direction relative to the body portion 11, and also possible to sufficiently achieve a mechanical strength of a portion of the container main body 20 where the first portion (opposing portion 67a) and the third portion (upward extending portion 67b) are formed.

In the case of this exemplary embodiment, it is also possible to provide the container 100 with a structure having favorable holdability for a user, and also possible to easily achieve a structure in which the handle portion 12 is bent toward a desired direction relative to the body portion 11.

In the case of this exemplary embodiment, when the container 100 is viewed in the front-rear direction, the external line of the local attached portion 29 of the first sheet portion 31 and the external line of the local attached portion 29 of the second sheet portion 32 overlap with each other. That is, when the container 100 is viewed in the direction in which the first main surface portion 20a and the second main surface portion 20b are opposed to each other, at least a portion of the local attached portion 29 of the first sheet portion 31 and at least a portion of the local attached portion 29 of the second sheet portion 32 overlap with each other, although the overlap is very small.

Thus, in the case of this exemplary embodiment, it is possible to achieve the filling portions having rigidity favorably balanced between the first communicating portion and the second communicating portion, and it is also possible to more easily achieve a structure in which the handle portion 12 straightly extends toward the lateral direction (the rightward direction) from the body portion 11.

### [Sixth Exemplary Embodiment]

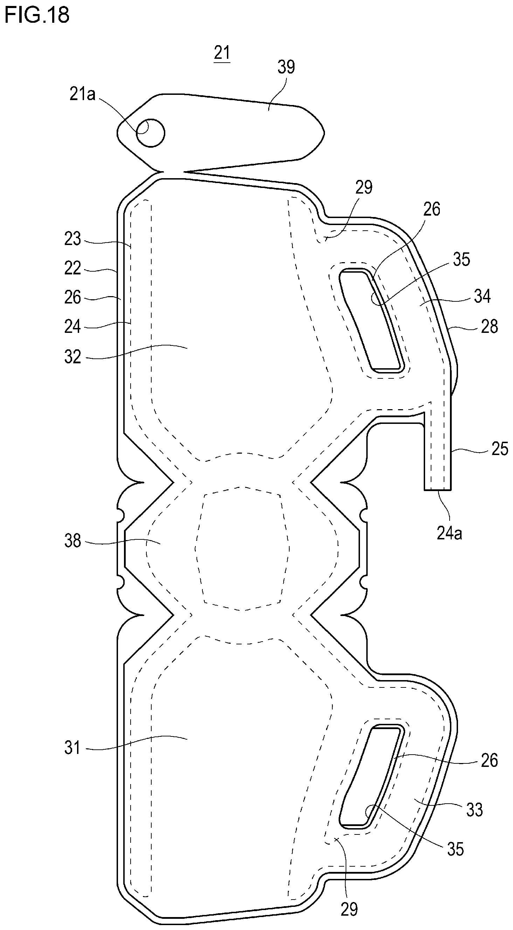

Next, a sixth exemplary embodiment will be described with reference to Figs. 17 and 18.

A container 100 according to the present exemplary embodiment differs from the container 100 according to the exemplary embodiments described above in terms of the points described below. In other points, the container 100 according to the present exemplary embodiment is configured in a manner similar to the container 100 according to the exemplary embodiments described above.

The exemplary embodiments described above give an example in which the local attached portion 29 is formed in the non-attached region 24 in an island manner. However, in the present exemplary embodiment, the local attached portion 29 is formed continuously with a portion of the main-body forming sheet member 21 that is an attached portion between the outer film 22 and the inner film 23 and surrounds the non-attached region 24, as illustrated in Figs. 17 and 18.

More specifically, the local attached portion 29 is formed into a shape that protrudes toward the inside of the non-attached region 24 from a portion of the main-body forming sheet member 21 that is an attached portion between the outer film 22 and the inner film 23 and surrounds the non-attached region 24. In other words, the local attached portion 29 is formed in a semi-island manner.

In the example illustrated in Figs. 17 and 18, the local attached portion 29 of the first sheet portion 31 and the local attached portion 29 of the second sheet portion 32 extend in directions opposite to each other, and are disposed so as not to overlap with each other in the front-rear direction.

However, in the case of this exemplary embodiment, the local attached portion 29 of the first sheet portion 31 and the local attached portion 29 of the second sheet portion 32 may overlap with each other in the front-rear direction. In a case where these local attached portions 29 overlap with each other in the front-rear direction, the local attached portions 29 may entirely overlap with each other (as in the first exemplary embodiment), or the local attached portions 29 may partially overlap with each other (as in the fifth exemplary embodiment).

Furthermore, in the case of this exemplary embodiment, both of the local attached portions 29 are disposed at positions along the boundary line BL (Fig. 17). Thus, with the present exemplary embodiment, it is possible to locally reduce the cross-sectional area of the filling portion 60 at the first communicating portion and the second communicating portion. This makes it possible to achieve a structure in which the handle portion 12 is bent toward a desired direction with respect to the body portion 11, and also possible to sufficiently obtain the mechanical strength at a portion of the container main body 20 where the first portion (opposing portion 67a) and the third portion (upward extending portion 67b) are formed.

In the case of this exemplary embodiment, it is possible to provide the container 100 having a structure with favorable holdability for a user, and also possible to easily achieve a structure in which the handle portion 12 is bent toward a desired direction with respect to the body portion 11.

### [Seventh Exemplary Embodiment]

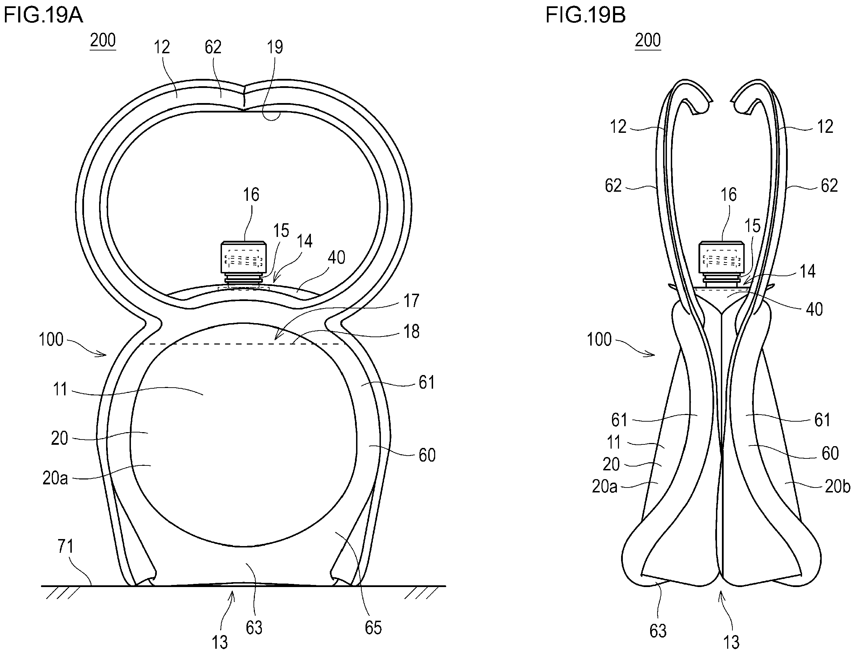

Next, a seventh exemplary embodiment will be described with reference to Figs. 19A and 19B.

Each of the exemplary embodiments described above gives an example in which the handle portion 12 protrudes toward the lateral direction of the body portion 11. However, in the case of this exemplary embodiment, the handle portion 12 protrudes upward of the body portion 11. This allows a user to hold a container 100 according to the present exemplary embodiment as if it is a handbag.

In the case of this exemplary embodiment, the filling portion 60 includes the first filling portion 61 formed in the body portion 11, and the second filling portion 62 formed in the handle portion 12. In addition, the first filling portion 61 and the second filling portion 62 communicate to each other.

Thus, it is possible to achieve favorable holdability of the container 100 for a user.

As illustrated in Fig. 19B, for example, the container 100 includes two handle portions 12 that are formed independently of each other, these handle portions 12 including, a first handle portion 12 that protrudes upward from the first main surface portion 20a, and a second handle portion 12 that protrudes upward from the second main surface portion 20b. However, the present invention is not limited to this example. The container 100 may include only either the first handle portion 12 or the second handle portion 12.

In the example in Fig. 19B, the handle portion 12 is formed in the shape of an inverted U (in other words, semi-annular shape), and both end portions of the handle portion 12 are each connected to the upper end portion of the body portion 11.

The shape of the body portion 11 or the arrangement of the filling portion 60 in the container 100 is not specifically limited. However, for example, the body portion 11 is formed into a substantially circular shape when viewed from the front surface side. The filling portion 60 includes a first filling portion 61 that is formed along the peripheral edge portion of the first main surface portion 20a (for example, formed into a circular ring shape), and a first filling portion 61 that is formed along the peripheral edge portion of the second main surface portion 20b (for example, formed into a circular ring shape).

In addition, the second filling portion 62 on each handle portion 12 is formed, for example, in the shape of an inverted U (semi-annular shape) along each of the handle portions 12, and communicates to the first filling portion 61 of the first main surface portion 20a and the first filling portion 61 of the second main surface portion 20b at both ends of each of the handle portions 12.

In the case of this exemplary embodiment, the inner bag is disposed, for example, only in the body portion 11.

The present invention is not limited to the above-described exemplary embodiments and each modification example. Various modes such as changes and modifications are included, provided that the object of the present invention is achieved.

For example, the penetrating portion 19 may not be formed in the container 100. That is, a portion of the handle portion 12 that is surrounded by the second filling portion 62 may be closed, for example, with a film made out of the main-body forming sheet member 21, the inner-bag forming sheet member 41, or the like.

Furthermore, the example in which the opposing portion 67a is formed continuously over both ends of the second filling portion 62 has been described. However, the opposing portion 67a may be discontinuous at a middle portion thereof.

Furthermore, in the example described above, the handle-portion sealing portion 48a on the outer peripheral side and the handle-portion sealing portion 48b on the inner peripheral side are formed in the handle portion 12. However, a sealing portion where the first handle forming sheet portion 33 and the second handle forming sheet portion 34 are attached to each other may not be formed in the handle portion 12.

Alternatively, a portion where the first handle forming sheet portion 33 and the second handle forming sheet portion 34 are not attached to each other may be provided at a middle portion of the handle-portion sealing portion 48a on the outer peripheral side. In addition, a portion where the first handle forming sheet portion 33 and the second handle forming sheet portion 34 are not attached to each other may be provided at a middle portion of the handle-portion sealing portion 48a on the inner peripheral side.

For example, the communicating region 49 may not be formed in the handle portion 12. That is, the containing portion 17 may be a closed region within the body portion 11. In addition, the inner container (for example, inner bag 40) may not be disposed within the handle portion 12 (the inner container may be disposed only within the body portion 11).

Furthermore, the outer film 22 and the inner film 23 of the main-body forming sheet member 21 may be formed so as to have the same shape, and also may overlap with each other in a manner such that the external lines of these films match each other.

In addition, the main-body forming sheet member 21 and the inner-bag forming sheet member 41 may be formed so as to have the same shape, and also may overlap with each other in a manner such that the external lines of these members match each other.

In addition, an example in which the container 100 includes the inner bag 40 (inner container) has been described above. However, a container that does not include the inner bag 40 may be possible.

In addition, in the exemplary embodiments described above, the local attached portion 29 is disposed at a position along the boundary line BL. However, the local attached portion 29 may be disposed at a position spaced apart from the boundary line BL, provided that the local attached portion 29 is disposed at the communicating portion so as to locally reduce the cross-sectional area of the filling portion 60.

The exemplary embodiments described above include the following technical ideas.
<1> A container including:
   a containing portion that is a closed space that stores contents; and
   a container main body including:
      a body portion that surrounds the containing portion; and
      a handle portion that protrudes from the body portion, in which
   the container main body includes a main-body forming sheet member in which a plurality of film layers are stacked,
   the main-body forming sheet member includes:
      a non-attached region in which the plurality of film layers are partially not attached to each other; and
      a filling portion in which a filler is contained between layers of the plurality of film layers of the non-attached region,
   the filling portion includes a first filling portion formed in the body portion and a second filling portion formed in the handle portion, and
   the first filling portion and the second filling portion communicate to each other.
<2> The container according to <1>, in which
   the second filling portion is formed into a semi-annular shape, and
   at least one of both end portions of the second filling portion communicates to the first filling portion.
<3> The container according to <1> or <2>, in which
   the handle portion is formed into a semi-annular shape,
   both ends of the handle portion are each connected to the body portion, and
   in the container main body, a penetrating portion that penetrates through this container main body is formed between the handle portion and the body portion.
<4> The container according to <3>, in which
   the second filling portion extends along the handle portion, and
   a narrow portion or a bent portion is formed at an intermediate portion between both ends of the second filling portion.
<5> The container according to <4>, in which
   the second filling portion is formed in a partially discontinuous manner between both ends of this second filling portion.
<6> The container according to <4> or <5>, in which
   a diameter of the second filling portion partially reduces between both ends of this second filling portion.
<7> The container according to any one of <3> to <6>, in which
   the handle portion includes a handle-portion sealing portion in which the plurality of film layers are attached to each other, the handle-portion sealing portion being provided on each of an outer peripheral side and an inner peripheral side of the handle portion, and
   a width size of the handle-portion sealing portion on the outer peripheral side of the handle portion is larger than a width size of the handle-portion sealing portion on the inner peripheral side of the handle portion.
<8> The container according to any one of <3> to <7>, in which
   the filling portion includes a first parallel extending portion and a second parallel extending portion that are opposed to each other with the penetrating portion being disposed between the first parallel extending portion and the second parallel extending portion, the first parallel extending portion and the second parallel extending portion extending in parallel to each other,
   the first filling portion includes the first parallel extending portion, and
   the second filling portion includes the second parallel extending portion.
<9> The container according to <8>, in which
   the second parallel extending portion is formed so as to be larger in diameter than the first parallel extending portion.
<10> The container according to any one of <1> to <9>, including
   a discharge portion that allows the contents to be discharged from the containing portion, in which
   the body portion includes a bottom portion,
   the discharge portion is disposed in an upper end portion of the body portion that is on a side opposite to the bottom portion,
   the first filling portion includes a body-portion vertically extending filling portion that extends from an upper end side of the body portion to a side of the bottom portion, and
   the body-portion vertically extending filling portion and the second filling portion communicate to each other in a boundary portion between the body portion and the handle portion.
<11> The container according to <10>, in which
   an attached portion in which the plurality of film layers are attached to each other is continuously formed along an entire region in which the body-portion vertically extending filling portion extends, the attached portion being provided in at least one of regions located at both sides of the body-portion vertically extending filling portion in a direction perpendicular to a direction in which the body-portion vertically extending filling portion extends.
<12> The container according to <11>,
   the body-portion vertically extending filling portion includes:
   a first-direction extending portion that extends in a first direction from a communicating portion between the body-portion vertically extending filling portion and the second filling portion, and
   a second-direction extending portion that extends from the communicating portion in a second direction differing from the first direction.
<13> The container according to any one of <1> to <12>, in which
   the second filling portion includes a communicating filling portion that extends toward the first filling portion and communicates to the first filling portion, and
   a local attached portion in which the plurality of film layers are locally attached to each other is formed so as to locally reduce a cross-sectional area of the filling portion that is perpendicular to a direction in which the communicating filling portion extends at a communicating portion between the communicating filling portion and the first filling portion.
<14> The container according to <13>, in which
   the local attached portion is formed in the non-attached region in an island manner.
<15> The container according to <13> or <14>, in which
   the body portion includes a first main surface portion and a second main surface portion that are opposed to each other with the containing portion being disposed between the first main surface portion and the second main surface portion,
   the main-body forming sheet member includes:
   a first sheet portion that constitutes the first main surface portion;
   a second sheet portion that constitutes the second main surface portion;
   a first handle forming sheet portion that continues with the first sheet portion; and
   a second handle forming sheet portion that continues with the second sheet portion,
   the first handle forming sheet portion and the second handle forming sheet portion overlap with each other in a direction in which the first main surface portion and the second main surface portion are opposed to each other to form the handle portion,
   the first filling portion is formed in each of the first sheet portion and the second sheet portion,
   the second filling portion is formed in each of the first handle forming sheet portion and the second handle forming sheet portion,
   the container main body includes:
   a first communicating portion in which the first filling portion formed in the first sheet portion and the communicating filling portion of the second filling portion formed in the first handle forming sheet portion communicate to each other; and
   a second communicating portion in which the first filling portion formed in the second sheet portion and the communicating filling portion of the second filling portion formed in the second handle forming sheet portion communicate to each other,
   the first communicating portion and the second communicating portion overlap with each other in the opposing direction.
<16> The container according to <15>, in which
   the local attached portion is formed in each of the first sheet portion and the second sheet portion.
<17> The container according to <16>, in which
   when the container is viewed in the opposing direction, the local attached portion of the first sheet portion and the local attached portion of the second sheet portion are disposed at locations positionally shifted to each other.
<18> The container according to <16> or <17>, in which
   when the container is viewed in the opposing direction, the local attached portion of the first sheet portion and the local attached portion of the second sheet portion at least partially overlap with each other.
<19> The container according to any one of <13> to <18>, including:
   a discharge portion that allows the contents to be discharged from the containing portion, in which
   the second filling portion is formed into a semi-annular shape,
   one end portion and the other end portion of the second filling portion each have the communicating filling portion that communicates to the first filling portion, and
   the local attached portion is formed so as to locally reduce a cross-sectional area of the filling portion that is perpendicular to a direction in which the communicating filling portion extends, the formation of the local attached portion being at the communicating portion between the communicating filling portion and the first filling portion, the communicating portion corresponding to an end portion disposed closer to the discharge portion from among the one end portion and the other end portion of the second filling portion.
<20> The container according to <19>, in which
   the body portion includes a bottom portion,
   the discharge portion is disposed in an upper portion of the body portion that is on a side opposite to the bottom portion,
   the handle portion protrudes toward a lateral direction from the body portion,
   the one end portion of the second filling portion is disposed higher than the other end portion of the second filling portion, and
   the local attached portion is formed so as to locally reduce a cross-sectional area of the filling portion that is perpendicular to a direction in which the communicating filling portion extends, the formation of the local attached portion being at the communicating portion between the communicating filling portion and the first filling portion, the communicating portion corresponding to the one end portion of the second filling portion.
<21> The container according to any one of <1> to <20>, in which
   a communicating region that communicates to the containing portion is formed inside of the handle portion.
<22> The container according to <21>, including
   an inner container that is surrounded by the container main body, in which
   the inner container includes the containing portion and the communicating region.
<23> The container according to any one of <1> to <22>, including
   a discharge portion that allows the contents to be discharged from the containing portion, in which
   the discharge portion is disposed on a side opposite to the handle portion on a basis of a central axis of the container.
<24> The container according to <23>, including
   the discharge portion includes an outlet cylinder portion, in which
   the outlet cylinder portion leans toward a side opposite to the handle portion.
<25> A contents-packed container including:
   the container according to any one of <1> to <24>; and
   contents stored in the containing portion.

Furthermore, the exemplary embodiments described above also include the following technical ideas.
<26> The container according to any one of the items described above, in which
the body portion includes a first main surface portion and a second main surface portion that are opposed to each other with the containing portion being disposed between the first main surface portion and the second main surface portion,
the main-body forming sheet member includes:
   a first sheet portion that constitutes the first main surface portion;
   a second sheet portion that constitutes the second main surface portion; and
   a first handle forming sheet portion that continues with the first sheet portion,
the first handle forming sheet portion constitutes the handle portion,
the first filling portion is formed in the first sheet portion, and
the second filling portion is formed in the first handle forming sheet portion.
<27> The container according to <26>, in which
   the main-body forming sheet member further includes a second handle forming sheet portion that continues with the second sheet portion, and
   the first handle forming sheet portion and the second handle forming sheet portion are caused to overlap with each other to form the handle portion.
<28> The container according to <26> or <27>, in which
   the first filling portion is also formed in the second sheet portion,
   the second filling portion is also formed in the second handle forming sheet portion.
<29> The container according to any one of the items described above, in which
   the body portion includes a bottom gusset portion, and
   the handle portion protrudes toward the lateral direction from the body portion.
<30> The container according to any one of the items described above, in which
   the second filling portion includes an intersecting extending portion that extends in a direction that intersects the first parallel extending portion,
   one end of the intersecting extending portion communicates to the first parallel extending portion, and
   the other end of the intersecting extending portion communicates to the second parallel extending portion.
<31> The container according to <30>, in which
   the second filling portion includes a second intersecting extending portion that extends in parallel to the intersecting extending portion.
<32> The container according to <31>, in which
   one end of the second intersecting extending portion communicates to the first parallel extending portion, and
   the other end of the second intersecting extending portion communicates to the second parallel extending portion.
<33> The container according to any one of the items described above, including:
   an inner container that is surrounded by the container main body, in which
   the inner container includes the containing portion,
   the container includes an external-air introducing portion that allows external air to be introduced between an external surface of the inner container and an inner surface of the container main body.

### Explanation of Reference Characters

- 11: body portion
- 12: handle portion
- 13: bottom gusset portion
- 14: top gusset portion
- 14a: first portion
- 14b: second portion
- 15: spout
- 15a: outlet cylinder portion
- 15b: plate shape portion
- 16: cap
- 17: containing portion
- 18: contents
- 19: penetrating portion
- 20: container main body
- 20a: first main surface portion
- 20b: second main surface portion
- 21: main-body forming sheet member
- 21a: insert hole
- 22: outer film
- 23: inner film
- 24: non-attached region
- 24a: open end
- 25: extending portion
- 26: exposing portion
- 28: sheet main body portion
- 29: local attached portion
- 31: first sheet portion
- 32: second sheet portion
- 33: first handle forming sheet portion
- 34: second handle forming sheet portion
- 35: penetrating portion
- 36: narrow portion
- 37: narrow portion
- 38: bottom-gusset forming sheet portion
- 39: top-gusset forming sheet portion
- 40: inner bag
- 40a: first main surface portion
- 40b: second main surface portion
- 41: inner-bag forming sheet member
- 41a: seal boundary line
- 41b: insert hole
- 42: inner-bag sealing portion
- 43: inner-outer seal portion
- 45: penetrating portion
- 48: main-body sealing portion
- 48a: handle-portion sealing portion
- 48b: handle-portion sealing portion
- 48c: attached portion
- 49: communicating region
- 51: container forming sheet member
- 60: filling portion
- 61: first filling portion
- 62: second filling portion
- 63: circular filling portion
- 64: sloped filling portion
- 65: sloped filling portion
- 66: body-portion vertically extending filling portion
- 67: body-portion vertically extending filling portion
- 67a: opposing portion
- 67b: upward extending portion
- 68: vertically extending filling portion
- 69: intersecting filling portion
- 70: intersecting filling portion
- 71: mounting surface
- 72: narrow portion
- 73: external-air introducing portion
- 74: discontinuity portion
- 75: slit
- 76: to-be-torn portion
- 81, 82, 83, 84: folding line
- 91, 92: horizontally extending filling portion
- 93, 94: vertically extending filling portion
- 100: container
- 200: contents-packed container
- 600: imaginary line

## Claims

1. A container comprising:
a containing portion that is a closed space that stores contents; and
a container main body including:
a body portion that surrounds the containing portion; and
a handle portion that protrudes from the body portion, wherein
the container main body includes a main-body forming sheet member in which a plurality of film layers are stacked,
the main-body forming sheet member includes:
a non-attached region in which the plurality of film layers are partially not attached to each other; and
a filling portion in which a filler is contained between layers of the plurality of film layers of the non-attached region,
the filling portion includes a first filling portion formed in the body portion and a second filling portion formed in the handle portion, and
the first filling portion and the second filling portion communicate to each other.

2. The container according to claim 1, wherein
the second filling portion is formed into a semi-annular shape, and
at least one of both end portions of the second filling portion communicates to the first filling portion.

3. The container according to claim 1 or 2, wherein
the handle portion is formed into a semi-annular shape,
both ends of the handle portion are each connected to the body portion, and
in the container main body, a penetrating portion that penetrates through this container main body is formed between the handle portion and the body portion.

4. The container according to claim 3, wherein
the second filling portion extends along the handle portion, and
a narrow portion or a bent portion is formed at an intermediate portion between both ends of the second filling portion.

5. The container according to claim 4, wherein
the second filling portion is formed in a partially discontinuous manner between both ends of this second filling portion.

6. The container according to claim 4 or 5, wherein
a diameter of the second filling portion partially reduces between both ends of this second filling portion.

7. The container according to any one of claims 3 to 6, wherein
the handle portion includes a handle-portion sealing portion in which the plurality of film layers are attached to each other, the handle-portion sealing portion being provided on each of an outer peripheral side and an inner peripheral side of the handle portion, and
a width size of the handle-portion sealing portion on the outer peripheral side of the handle portion is larger than a width size of the handle-portion sealing portion on the inner peripheral side of the handle portion.

8. The container according to any one of claims 3 to 7, wherein
the filling portion includes a first parallel extending portion and a second parallel extending portion that are opposed to each other with the penetrating portion being disposed between the first parallel extending portion and the second parallel extending portion, the first parallel extending portion and the second parallel extending portion extending in parallel to each other,
the first filling portion includes the first parallel extending portion, and
the second filling portion includes the second parallel extending portion.

9. The container according to claim 8, wherein
the second parallel extending portion is formed to be larger in diameter than the first parallel extending portion.

10. The container according to any one of claims 1 to 9, comprising:
a discharge portion that allows the contents to be discharged from the containing portion, wherein
the body portion includes a bottom portion,
the discharge portion is disposed in an upper end portion of the body portion that is on a side opposite to the bottom portion,
the first filling portion includes a body-portion vertically extending filling portion that extends from an upper end side of the body portion to a side of the bottom portion, and
the body-portion vertically extending filling portion and the second filling portion communicate to each other in a boundary portion between the body portion and the handle portion.

11. The container according to claim 10, wherein
an attached portion in which the plurality of film layers are attached to each other is continuously formed along an entire region in which the body-portion vertically extending filling portion extends, the attached portion being provided in at least one of regions located at both sides of the body-portion vertically extending filling portion in a direction perpendicular to a direction in which the body-portion vertically extending filling portion extends.

12. The container according to claim 11, wherein
the body-portion vertically extending filling portion includes:
a first-direction extending portion that extends in a first direction from a communicating portion between the body-portion vertically extending filling portion and the second filling portion, and
a second-direction extending portion that extends from the communicating portion in a second direction differing from the first direction.

13. The container according to any one of claims 1 to 12, wherein
the second filling portion includes a communicating filling portion that extends toward the first filling portion and communicates to the first filling portion, and
a local attached portion in which the plurality of film layers are locally attached to each other is formed so as to locally reduce a cross-sectional area of the filling portion that is perpendicular to a direction in which the communicating filling portion extends at a communicating portion between the communicating filling portion and the first filling portion.

14. The container according to claim 13, wherein
the local attached portion is formed in the non-attached region in an island manner.

15. The container according to claim 13 or 14, wherein
the body portion includes a first main surface portion and a second main surface portion that are opposed to each other with the containing portion being disposed between the first main surface portion and the second main surface portion,
the main-body forming sheet member includes:
a first sheet portion that constitutes the first main surface portion;
a second sheet portion that constitutes the second main surface portion;
a first handle forming sheet portion that continues with the first sheet portion; and
a second handle forming sheet portion that continues with the second sheet portion,
the first handle forming sheet portion and the second handle forming sheet portion overlap with each other in a direction in which the first main surface portion and the second main surface portion are opposed to each other to form the handle portion,
the first filling portion is formed in each of the first sheet portion and the second sheet portion,
the second filling portion is formed in each of the first handle forming sheet portion and the second handle forming sheet portion,
the container main body includes:
a first communicating portion in which the first filling portion formed in the first sheet portion and the communicating filling portion of the second filling portion formed in the first handle forming sheet portion communicate to each other; and
a second communicating portion in which the first filling portion formed in the second sheet portion and the communicating filling portion of the second filling portion formed in the second handle forming sheet portion communicate to each other, and
the first communicating portion and the second communicating portion overlap with each other in the opposing direction.

16. The container according to claim 15, wherein
the local attached portion is formed in each of the first sheet portion and the second sheet portion.

17. The container according to claim 16, wherein
when the container is viewed in the opposing direction, the local attached portion of the first sheet portion and the local attached portion of the second sheet portion are disposed at locations positionally shifted to each other.

18. The container according to claim 16 or 17, wherein
when the container is viewed in the opposing direction, the local attached portion of the first sheet portion and the local attached portion of the second sheet portion at least partially overlap with each other.

19. The container according to any one of claims 13 to 18, comprising:
a discharge portion that allows the contents to be discharged from the containing portion, wherein
the second filling portion is formed into a semi-annular shape,
one end portion and the other end portion of the second filling portion each have the communicating filling portion that communicates to the first filling portion, and
the local attached portion is formed so as to locally reduce a cross-sectional area of the filling portion that is perpendicular to a direction in which the communicating filling portion extends, the formation of the local attached portion being at the communicating portion between the communicating filling portion and the first filling portion, the communicating portion corresponding to an end portion disposed closer to the discharge portion from among the one end portion and the other end portion of the second filling portion.

20. The container according to claim 19, wherein
the body portion includes a bottom portion,
the discharge portion is disposed in an upper portion of the body portion that is on a side opposite to the bottom portion,
the handle portion protrudes toward a lateral direction from the body portion,
the one end portion of the second filling portion is disposed higher than the other end portion of the second filling portion, and
the local attached portion is formed so as to locally reduce a cross-sectional area of the filling portion that is perpendicular to a direction in which the communicating filling portion extends, the formation of the local attached portion being at the communicating portion between the communicating filling portion and the first filling portion, the communicating portion corresponding to the one end portion of the second filling portion.

21. The container according to any one of claims 1 to 20, wherein
a communicating region that communicates to the containing portion is formed inside of the handle portion.

22. The container according to claim 21, comprising:
an inner container that is surrounded by the container main body, wherein
the inner container includes the containing portion and the communicating region.

23. The container according to any one of claims 1 to 22, comprising:
a discharge portion that allows the contents to be discharged from the containing portion, wherein
the discharge portion is disposed on a side opposite to the handle portion on a basis of a central axis of the container.

24. The container according to claim 23, comprising:
the discharge portion includes an outlet cylinder portion, wherein
the outlet cylinder portion leans toward a side opposite to the handle portion.

25. A contents-packed container comprising:
the container according to any one of claims 1 to 24; and
contents stored in the containing portion.
